(19) 

Europäisches Patentamt
European Patent Office
Office européen des brevets

(11) **EP 4 654 515 A1**

(12) **EUROPEAN PATENT APPLICATION**
published in accordance with Art. 153(4) EPC

(43) Date of publication:
**26.11.2025 Bulletin 2025/48**

(21) Application number: **24756150.9**

(22) Date of filing: **06.02.2024**

(51) International Patent Classification (IPC):
**H04L 5/00** (2006.01)

(52) Cooperative Patent Classification (CPC):
**H04B 7/0413; H04J 13/00; H04J 13/18; H04L 5/00**

(86) International application number:
**PCT/CN2024/076255**

(87) International publication number:
**WO 2024/169777 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310183004**

(71) Applicant: **Huawei Technologies Co., Ltd.
Shenzhen, Guangdong 518129 (CN)**

(72) Inventors:
- LIU, Xiaoqing
  **Shenzhen, Guangdong 518129 (CN)**
- YU, Zheng
  **Shenzhen, Guangdong 518129 (CN)**
- ZHANG, Zhening
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD AND APPARATUS FOR DETERMINING CAPABILITY INFORMATION**

(57) A capability information determining method and apparatus, related to the field of communication technologies, are disclosed, and can ensure that processing complexity required for a UE to decode a DMRS does not exceed a processing capability of the UE. The method may include: A network device sends first indication information, and determines capability information of a reference signal based on the first indication information. Correspondingly, a terminal device receives the first indication information, and determines the capability information of the reference signal based on the first indication information. The first indication information indicates at least one of a code length, a type, a port number, and a time resource of the reference signal.

FIG. 8

**Description**

This application claims priority to Chinese Patent Application No. 202310183004.7, filed with the China National Intellectual Property Administration on February 17, 2023 and entitled "CAPABILITY INFORMATION DETERMINING METHOD AND APPARATUS", which is incorporated herein by reference in its entirety.

**TECHNICAL FIELD**

Embodiments of this application relate to communication technologies, and in particular, to a capability information determining method and apparatus.

**BACKGROUND**

One objective of demodulation reference signal (Demodulation reference signal, DMRS) enhancement proposed in a multiple-input multiple-output (multiple-input multiple-output, MIMO) topic of the 3rd generation partnership project (3rd generation partnership project, 3GPP) release 18 (Rel-18, R18) is to increase a quantity of orthogonal DMRS ports to 24 without increasing DMRS overheads. Currently, the quantity of orthogonal DMRS ports is mainly increased by extending a length of a frequency division orthogonal cover code (Frequency division Orthogonal Cover Code, FD-OCC code) in an existing protocol from 2 to 4 (which may be referred to as an OCC-4 solution). In this extension manner, for each DMRS type, both a maximum quantity of orthogonal ports for a single-symbol DMRS and a maximum quantity of orthogonal ports for a dual-symbol DMRS may be doubled.

In an existing new radio (New Radio, NR) system, to ensure reliability of sending a signal, a hybrid automatic repeat request (Hybrid automatic repeat request, HARQ) technology is adopted, and a user equipment (User equipment, UE) may determine, by using a parity bit added after a transmit signal, whether the signal is correctly received. When receiving of the signal is correct, the UE sends an acknowledgment character (Acknowledgement, ACK) to a transmission and reception point (transmission and reception point, TRP). When an error occurs in the receiving, the UE sends a negative acknowledgement character (Negative acknowledgement, NACK) to the TRP, to notify the TRP that the error occurs in the receiving, and a base station resends a signal to the UE subsequently.

In the existing NR system, when an FD-OCC code length of a DMRS that the UE is configured to receive is 4, in comparison with an existing DMRS whose FD-OCC code length is 2, the UE needs to perform a more complex operation to decode the DMRS, resulting in processing complexity that exceeds a processing capability of the UE.

**SUMMARY**

Embodiments of this application provide a capability information determining method and apparatus, to ensure that processing complexity required for a UE to decode a DMRS does not exceed a processing capability of the UE.

According to a first aspect, an embodiment of this application provides a capability information determining method. The method includes:

sending first indication information, where the first indication information indicates at least one of a code length, a type, a port number, and a time resource of a reference signal; and
determining capability information of the reference signal based on the first indication information.

In a possible design, the capability information includes first capability information and/or second capability information, the first capability information includes processing capability information of a physical downlink channel corresponding to the reference signal, and the second capability information includes antenna information corresponding to the reference signal.

In a possible design, the method further includes:

sending second indication information, where the second indication information indicates a first physical resource and a second physical resource of the reference signal; and
determining, based on the second indication information, that a time interval between the first physical resource and the second physical resource is T, where
T is greater than or equal to a first time length, and the first time length is determined based on the first capability information of the reference signal.

In a possible design, determining the capability information of the reference signal based on the first indication information includes:

determine the first capability information of the reference signal based on the first indication information and first capability reporting information, where
the first capability reporting information indicates whether a first processing capability is supported when the code length of the reference signal is 4;
or
the first capability reporting information indicates whether a terminal device separately supports the code length 4 of the reference signal when supporting a first processing capability and a second processing capability;
or
the first capability reporting information indicates whether a terminal device supports the code length 4 of the reference signal when supporting a first processing capability.

In a possible design, determining the capability information of the reference signal based on the first indication information includes:

determine the second capability information of the reference signal based on the first indication information and second capability reporting information, where
the second capability reporting information indicates whether the terminal device supports a quantity X of antennas and/or a quantity Y of antennas when the code length of the reference signal is 4;
or
the second capability reporting information indicates whether the terminal device separately supports the code length 4 of the reference signal when supporting a quantity X of antennas and a quantity Y of antennas;
or
the second capability reporting information indicates whether the terminal device supports the code length 4 of the reference signal when supporting a quantity X of antennas, where
both X and Y are positive integers.

In a possible design, values of X and Y are any one of the following:

X is 8, and Y is 4;
or
X is 8, and Y is less than or equal to 4;
or
X is greater than 4, and Y is less than or equal to 4;
or
X is greater than 4, and Y is equal to 4;
or
X is 8, and Y is less than 8.

In a possible design, the first capability information is determined based on the first indication information and first predefined information, and the first predefined information is that when the code length of the reference signal is 4, a capability of processing the physical downlink channel corresponding to the reference signal is a second processing capability.

In a possible design, the second capability information is determined based on the first indication information and second predefined information, the second predefined information is that when the code length of the reference signal is 4, a quantity of antennas supported by a terminal device is Y, and Y is a positive integer.

In a possible design, the code length of the reference signal and the first time length meet:

when the code length of the reference signal is 4, the first time length is T1; or
when the code length of the reference signal is 2, the first time length is T2, where
both T1 and T2 are positive integers, and T1 is greater than T2.

In a possible design, when the code length of the reference signal is 4, the first time length T1 meets:

$$\text{Formula (1): } T_{proc,1} = (N_1 + d_{1,1} + d_2 + d_3)(2048 + 144) \cdot \kappa 2^{-\mu} \cdot T_c + T_{ext};$$

or

$$\text{Formula (2): } T_{\text{proc},1} = \left(N_1 + d_{1,1} + d_2\right)(2048 + 144) \cdot \kappa 2^{-\mu} \cdot T_c + T_{\text{ext}},$$

where

$T_{\text{proc},1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{\text{ext}}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

In a possible design, T1 is a sum of T2 and a preset symbol length.

In a possible design, $N_1$ is time determined based on a mapping relationship between $N_1$ and $\mu$, and the mapping relationship between $N_1$ and $\mu$ is determined based on the first capability information;

or

$N_1$ is time obtained by adding preset second time to time determined based on a mapping relationship between $N_1$ and $\mu$, and the mapping relationship between $N_1$ and $\mu$ is determined based on the first capability information.

In a possible design, the method further includes:

receiving third capability reporting information, where the third capability reporting information indicates the first time or the second time.

In a possible design, the method further includes:

receiving the first capability reporting information.

In a possible design, the method further includes:

receiving the second capability reporting information.

According to a second aspect, an embodiment of this application provides a capability information determining method. The method includes:

receiving first indication information, where the first indication information indicates at least one of a code length, a type, a port number, and a time resource of a reference signal; and
determining capability information of the reference signal based on the first indication information.

In a possible design, the capability information includes first capability information and/or second capability information, the first capability information includes processing capability information of a physical downlink channel corresponding to the reference signal, and the second capability information includes antenna information corresponding to the reference signal.

In a possible design, the method further includes:

receiving second indication information, where the second indication information indicates a first physical resource and a second physical resource of the reference signal; and
determining, based on the second indication information, that a time interval between the first physical resource and the second physical resource is T, where
T is greater than or equal to a first time length, and the first time length is determined based on the first capability information of the reference signal.

In a possible design, determining the capability information of the reference signal based on the first indication information includes:

determine the first capability information of the reference signal based on the first indication information and first capability reporting information, where
the first capability reporting information indicates whether a first processing capability is supported when the code length of the reference signal is 4;
or
the first capability reporting information indicates whether a terminal device separately supports the code length 4 of the reference signal when supporting a first processing capability and a second processing capability;
or
the first capability reporting information indicates whether a terminal device supports the code length 4 of the reference signal when supporting a first processing capability.

In a possible design, determining the capability information of the reference signal based on the first indication information includes:

> determining the second capability information of the reference signal based on the first indication information and second capability reporting information, where
> the second capability reporting information indicates whether the terminal device supports a quantity X of antennas and/or a quantity Y of antennas when the code length of the reference signal is 4;
> or
> the second capability reporting information indicates whether the terminal device separately supports the code length 4 of the reference signal when supporting a quantity X of antennas and a quantity Y of antennas;
> or
> the second capability reporting information indicates whether the terminal device supports the code length 4 of the reference signal when supporting a quantity X of antennas, where
> both X and Y are positive integers.

In a possible design, values of X and Y are any one of the following:

> X is 8, and Y is 4;
> or
> X is 8, and Y is less than or equal to 4;
> or
> X is greater than 4, and Y is less than or equal to 4;
> or
> X is greater than 4, and Y is equal to 4;
> or
> X is 8, and Y is less than 8.

In a possible design, the first capability information is determined based on the first indication information and first predefined information, and the first predefined information is that when the code length of the reference signal is 4, a capability of processing the physical downlink channel corresponding to the reference signal is a second processing capability.

In a possible design, the second capability information is determined based on the first indication information and second predefined information, and the second predefined information is that when the code length of the reference signal is 4, a quantity of antennas supported by a terminal device is Y.

In a possible design, the code length of the reference signal and the first time length meet:

> when the code length of the reference signal is 4, the first time length is T1; or
> when the code length of the reference signal is 2, the first time length is T2, where
> both T1 and T2 are positive integers, and T1 is greater than T2.

In a possible design, when the code length of the reference signal is 4, the first time length T1 meets:

$$\text{Formula (1): } T_{proc,1} = (N_1 + d_{1,1} + d_2 + d_3)(2048 + 144) \cdot \kappa 2^{-\mu} \cdot T_c + T_{ext};$$

or

$$\text{Formula (2): } T_{proc,1} = \left(N_1 + d_{1,1} + d_2\right)(2048 + 144) \cdot \kappa 2^{-\mu} \cdot T_c + T_{ext},$$

where
$T_{proc,1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{ext}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

In a possible design, T1 is a sum of T2 and a preset symbol length.

In a possible design, $N_1$ is time determined based on a mapping relationship between $N_1$ and $\mu$, and the mapping relationship between $N_1$ and $\mu$ is determined based on the first capability information;

or

$N_1$ is time obtained by adding preset second time to time determined based on a mapping relationship between $N_1$ and $\mu$, and the mapping relationship between $N_1$ and $\mu$ is determined based on the first capability information.

In a possible design, the method further includes:

receiving third capability reporting information, where the third capability reporting information indicates the first time or the second time.

In a possible design, the method further includes:

receiving the first capability reporting information.

In a possible design, the method further includes:

receiving the second capability reporting information.

According to a third aspect, an embodiment of this application provides a capability information determining apparatus. The apparatus includes:

a transceiver module, configured to send first indication information, where the first indication information indicates at least one of a code length, a type, a port number, and a time resource of a reference signal; and

a processing module, configured to determine capability information of the reference signal based on the first indication information.

In a possible design, the capability information includes first capability information and/or second capability information, the first capability information includes processing capability information of a physical downlink channel corresponding to the reference signal, and the second capability information includes antenna information corresponding to the reference signal.

In a possible design, the transceiver module is further configured to send second indication information, where the second indication information indicates a first physical resource and a second physical resource of the reference signal; and

the processing module is further configured to determine, based on the second indication information, that a time interval between the first physical resource and the second physical resource is T, where

T is greater than or equal to a first time length, and the first time length is determined based on the first capability information of the reference signal.

In a possible design, the processing module is specifically configured to:

determine the first capability information of the reference signal based on the first indication information and first capability reporting information, where

the first capability reporting information indicates whether a first processing capability is supported when the code length of the reference signal is 4;

or

the first capability reporting information indicates whether a terminal device separately supports the code length 4 of the reference signal when supporting a first processing capability and a second processing capability;

or

the first capability reporting information indicates whether a terminal device supports the code length 4 of the reference signal when supporting a first processing capability.

In a possible design, the processing module is specifically configured to:

determining the second capability information of the reference signal based on the first indication information and second capability reporting information, where

the second capability reporting information indicates whether the terminal device supports a quantity X of antennas and/or a quantity Y of antennas when the code length of the reference signal is 4;

or

the second capability reporting information indicates whether the terminal device separately supports the code length 4 of the reference signal when supporting a quantity X of antennas and a quantity Y of antennas;

or

the second capability reporting information indicates whether the terminal device supports the code length 4 of the reference signal when supporting a quantity X of antennas, where

both X and Y are positive integers.

In a possible design, values of X and Y are any one of the following:

X is 8, and Y is 4;
or
X is 8, and Y is less than or equal to 4;
or
X is greater than 4, and Y is less than or equal to 4;
or
X is greater than 4, and Y is equal to 4;
or
X is 8, and Y is less than 8.

In a possible design, the first capability information is determined based on the first indication information and first predefined information, and the first predefined information is that when the code length of the reference signal is 4, a capability of processing the physical downlink channel corresponding to the reference signal is a second processing capability.

In a possible design, the second capability information is determined based on the first indication information and second predefined information, the second predefined information is that when the code length of the reference signal is 4, a quantity of antennas supported by a terminal device is Y, and Y is a positive integer.

In a possible design, the code length of the reference signal and the first time length meet:

when the code length of the reference signal is 4, the first time length is T1; or
when the code length of the reference signal is 2, the first time length is T2, where both T1 and T2 are positive integers, and T1 is greater than T2.

In a possible design, when the code length of the reference signal is 4, the first time length T1 meets:

$$\text{Formula (1): } T_{proc,1} = (N_1 + d_{1,1} + d_2 + d_3)(2048 + 144) \cdot \kappa 2^{-\mu} \cdot T_c + T_{ext};$$

or

$$\text{Formula (2): } T_{proc,1} = (N_1 + d_{1,1} + d_2)(2048 + 144) \cdot \kappa 2^{-\mu} \cdot T_c + T_{ext},$$

where

$T_{proc,1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{ext}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

In a possible design, T1 is a sum of T2 and a preset symbol length.

In a possible design, $N_1$ is time determined based on a mapping relationship between $N_1$ and $\mu$, and the mapping relationship between $N_1$ and $\mu$ is determined based on the first capability information;

or

$N_1$ is time obtained by adding preset second time to time determined based on a mapping relationship between $N_1$ and $\mu$, and the mapping relationship between $N_1$ and $\mu$ is determined based on the first capability information.

In a possible design, the transceiver module is specifically configured to:

receive third capability reporting information, where the third capability reporting information indicates the first time or the second time.

In a possible design, the transceiver module is specifically configured to:

receive the first capability reporting information.

In a possible design, the transceiver module is specifically configured to:

receive the second capability reporting information.

According to a fourth aspect, an embodiment of this application provides a capability information determining apparatus. The apparatus includes:

a transceiver module, configured to receive first indication information, where the first indication information indicates at least one of a code length, a type, a port number, and a time resource of a reference signal; and
a processing module, configured to determine capability information of the reference signal based on the first indication information.

In a possible design, the capability information includes first capability information and/or second capability information, the first capability information includes processing capability information of a physical downlink channel corresponding to the reference signal, and the second capability information includes antenna information corresponding to the reference signal.

In a possible design, the transceiver module is further configured to receive second indication information, where the second indication information indicates a first physical resource and a second physical resource of the reference signal; and

the processing module is further configured to determine, based on the second indication information, that a time interval between the first physical resource and the second physical resource is T, where

T is greater than or equal to a first time length, and the first time length is determined based on the first capability information of the reference signal.

In a possible design, the processing module is specifically configured to:

determine the first capability information of the reference signal based on the first indication information and first capability reporting information, where
the first capability reporting information indicates whether a first processing capability is supported when the code length of the reference signal is 4;
or
the first capability reporting information indicates whether a terminal device separately supports the code length 4 of the reference signal when supporting a first processing capability and a second processing capability;
or
the first capability reporting information indicates whether a terminal device supports the code length 4 of the reference signal when supporting a first processing capability.

In a possible design, the processing module is specifically configured to:

determine the second capability information of the reference signal based on the first indication information and second capability reporting information, where
the second capability reporting information indicates whether the terminal device supports a quantity X of antennas and/or a quantity Y of antennas when the code length of the reference signal is 4;
or
the second capability reporting information indicates whether the terminal device separately supports the code length 4 of the reference signal when supporting a quantity X of antennas and a quantity Y of antennas;
or
the second capability reporting information indicates whether the terminal device supports the code length 4 of the reference signal when supporting a quantity X of antennas, where
both X and Y are positive integers.

In a possible design, values of X and Y are any one of the following:

X is 8, and Y is 4;
or
X is 8, and Y is less than or equal to 4;
or
X is greater than 4, and Y is less than or equal to 4;
or
X is greater than 4, and Y is equal to 4;
or
X is 8, and Y is less than 8.

In a possible design, the first capability information is determined based on the first indication information and first predefined information, and the first predefined information is that when the code length of the reference signal is 4, a capability of processing the physical downlink channel corresponding to the reference signal is a second processing capability.

In a possible design, the second capability information is determined based on the first indication information and second predefined information, and the second predefined information is that when the code length of the reference signal is 4, a quantity of antennas supported by a terminal device is Y.

In a possible design, the code length of the reference signal and the first time length meet:

when the code length of the reference signal is 4, the first time length is T1; or

when the code length of the reference signal is 2, the first time length is T2, where both T1 and T2 are positive integers, and T1 is greater than T2.

In a possible design, when the code length of the reference signal is 4, the first time length T1 meets:

$$\text{Formula (1): } T_{proc,1} = (N_1 + d_{1,1} + d_2 + d_3)(2048 + 144) \cdot \kappa 2^{-\mu} \cdot T_c + T_{ext};$$

or

$$\text{Formula (2): } T_{proc,1} = (N_1 + d_{1,1} + d_2)(2048 + 144) \cdot \kappa 2^{-\mu} \cdot T_c + T_{ext},$$

where

$T_{proc,1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{ext}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

In a possible design, T1 is a sum of T2 and a preset symbol length.

In a possible design, $N_1$ is time determined based on a mapping relationship between $N_1$ and $\mu$, and the mapping relationship between $N_1$ and $\mu$ is determined based on the first capability information;

or

$N_1$ is time obtained by adding preset second time to time determined based on a mapping relationship between $N_1$ and $\mu$, and the mapping relationship between $N_1$ and $\mu$ is determined based on the first capability information.

In some possible designs, the transceiver module is further configured to:

receive third capability reporting information, where the third capability reporting information indicates the first time or the second time.

In some possible designs, the transceiver module is further configured to:

receive the first capability reporting information.

In some possible designs, the transceiver module is further configured to:

receive the second capability reporting information.

According to a fifth aspect, an embodiment of this application provides a communication apparatus. The communication apparatus includes a processor, and the processor is configured to run a computer program or instructions, to enable the communication apparatus to perform the capability information determining method according to the first aspect, or perform the capability information determining method according to the second aspect.

According to a sixth aspect, an embodiment of this application provides a computer-readable storage medium. The computer-readable storage medium stores computer instructions or a program, and when the computer instructions or the program is run on a computer, the capability information determining method according to the first aspect is performed, or the capability information determining method according to the second aspect is performed.

According to a seventh aspect, an embodiment of this application provides a computer program product. The computer program product includes computer instructions, and when a part or all of the computer instructions are run on a computer, the capability information determining method according to the first aspect is performed, or the capability information determining method according to the second aspect is performed.

## BRIEF DESCRIPTION OF DRAWINGS

FIG. 1 is a diagram of a type-1 single-symbol DMRS according to an embodiment of this application;

FIG. 2 is a diagram of a type-1 dual-symbol DMRS according to an embodiment of this application;

FIG. 3 is a diagram of another type-2 single-symbol DMRS according to an embodiment of this application;

FIG. 4 is a diagram of another type-2 dual-symbol DMRS according to an embodiment of this application;

FIG. 5 is a diagram of an OCC-4 solution according to an embodiment of this application;

FIG. 6 is a diagram of a communication system according to an embodiment of this application;

FIG. 7 is a diagram of composition of a communication apparatus according to an embodiment of this application;

FIG. 8 is a flowchart of a capability information determining method according to an embodiment of this application;

FIG. 9 is a diagram of a structure of Embodiment 1 of a capability information determining apparatus according to an embodiment of this application;

FIG. 10 is a diagram of a structure of Embodiment 2 of a capability information determining apparatus according to an embodiment of this application; and

FIG. 11 is a diagram of composition of a communication apparatus according to an embodiment of this application.

## DESCRIPTION OF EMBODIMENTS

Before embodiments of this application are described, technical terms used in embodiments of this application are described.

**DMRS configuration type:** In a fifth generation radio access system standard NR, based on a mapping manner in frequency domain, DMRSs are classified into two configuration types: a type 1 (a configuration type 1) and a type 2 (a configuration type 2). For each configuration type, one DMRS sequence is mapped to one or two orthogonal frequency division multiplexing (Orthogonal Frequency Division Multiplexing, OFDM) symbols, that is, DMRSs are classified into a single-symbol DMRS and a dual-symbol DMRS based on a quantity of occupied symbols in time domain. Based on a sequential position in time domain, the DMRSs are classified into a front-loaded (front-loaded) DMRS and an additional (additional) DMRS. A frequency domain mapping manner and a sequence generation manner of the front-loaded DMRS are completely the same as those of the additional DMRS.

**Multiplexing technology:** is a technology in which a plurality of channels are combined on a transmission path and the plurality of channels are demultiplexed at a receive end to restore each channel of signals. This technology can effectively improve channel transmission efficiency. Specifically, by using the multiplexing technology, a plurality of channels of signals are combined at a transmit end (for example, a mixer used by a broadcasting and television front end) for transmission on a dedicated physical channel. Then, the receive end separates a combined signal.

The multiplexing technology in this application mainly includes three types: frequency division multiplexing (Frequency division multiplexing, FDM), time division multiplexing (Time division multiplexing, TDM), and code division multiplexing (Code division multiplexing, CDM).

**FDM:** A carrier bandwidth is divided into subchannels of different bands, and all users can simultaneously perform transmission of respective signals on different subchannels. It can be learned that all the users occupy different bandwidth resources at same time during frequency division multiplexing.

**TDM:** Different channels are obtained through division based on time, and all users occupy same bandwidths at different time.

**CDM:** All users may perform communication on same bands at same time. Because the users use different specially selected code types, no interference is caused between the users. In the present invention, an orthogonal cover code (Orthogonal Cover Code, OCC) is used to implement code division multiplexing.

In an existing protocol, the FDM, an FD-OCC, and a time division orthogonal cover code (Time division Orthogonal Cover Code, TD-OCC) are jointly used to multiplex orthogonal ports of the DMRS.

**DMRS multiplexing method:** The following separately describes the DMRS multiplexing method from two aspects: a type-1 DMRS and a type-2 DMRS.

Type-1 DMRS

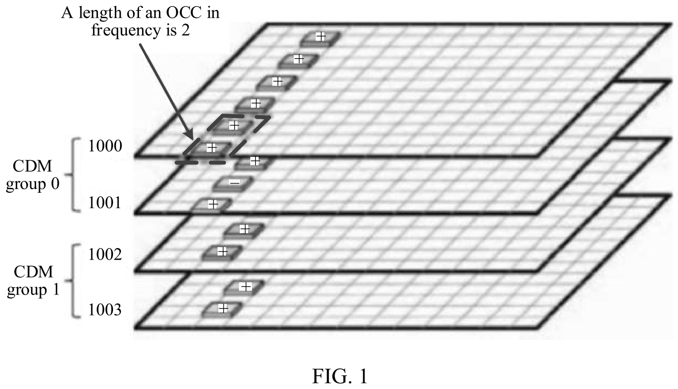

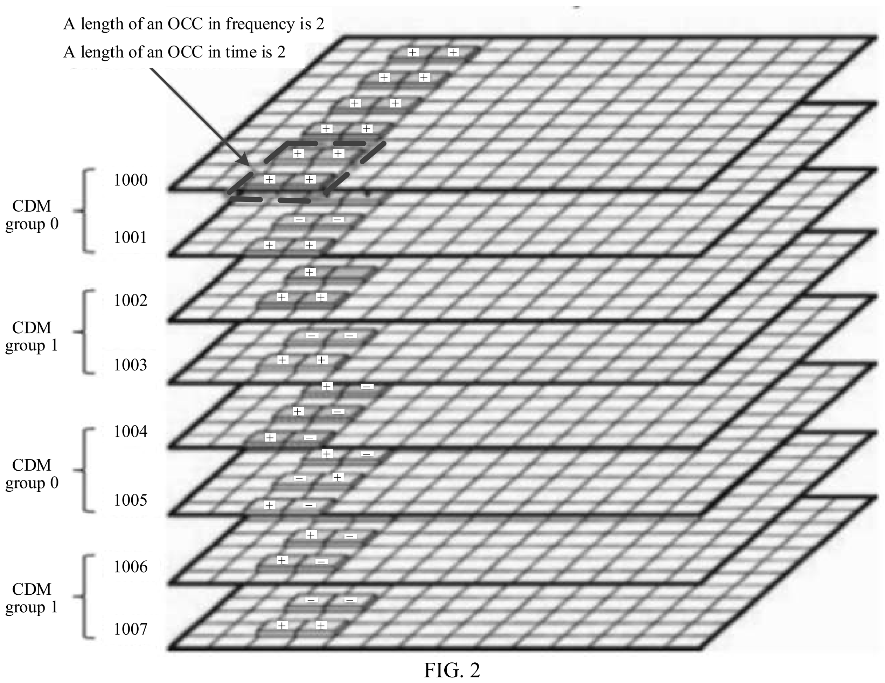

For example, FIG. 1 is a diagram of a type-1 single-symbol DMRS according to an embodiment of this application. FIG. 2 is a diagram of a type-1 dual-symbol DMRS according to an embodiment of this application. For the type-1 DMRS, for example, as shown in FIG. 1 and FIG. 2, in frequency domain, a DMRS sequence is mapped to one subcarrier every other subcarrier (or the DMRS sequence is mapped to one of every two subcarriers). Therefore, a maximum of two orthogonal DMRS ports can be multiplexed in frequency domain in an FDM manner. It should be noted herein that DMRS signals mapped to a same subcarrier belong to a same CDM group. As shown in FIG. 1, a port 1000 and a port 1001 belong to a CDM group 0, and a port 1002 and a port 1003 belong to a CDM group 1. A plurality of ports are orthogonal through code division multiplexing between different ports in the same CDM group.

In code domain, release 15 (Rel-15, R15), release 16 (Rel-16, R16), and release 17 (Rel-17, R17) support an OCC with a length of 2, and a maximum of two orthogonal DMRS ports can be multiplexed in a code division multiplexing manner. For example, orthogonal codes that are of the port 1000 and that are mapped to corresponding resource elements (Resource Elements, REs) in one resource block (Resource block, RB) are sequentially {+1, +1, +1, +1, +1, +1}. In this case, the port 1000 and the port 1001 are orthogonal in code domain.

As shown in FIG. 1 and FIG. 2, in time domain, a DMRS supports two configuration manners: a single-symbol configuration manner and a dual-symbol configuration manner, and a maximum of two orthogonal DMRS ports can be multiplexed in a TD-OCC manner. For example, for four ports 1000, 1001, 1004, and 1005 in a same CDM group 0, on a 1st OFDM symbol and a 2nd OFDM symbol, orthogonal codes that are of each port and that are mapped to corresponding REs in one RB are shown in Table 1.

Table 1

|  | 1000 | | 1001 | | 1004 | | 1005 | |
|---|---|---|---|---|---|---|---|---|
|  | Symbol 1 | Symbol 2 | Symbol 1 | Symbol 2 | Symbol 1 | Symbol 2 | Symbol 1 | Symbol 2 |
| RE 0 | +1 | +1 | +1 | +1 | +1 | -1 | +1 | -1 |
| RE 2 | +1 | +1 | -1 | -1 | +1 | -1 | -1 | +1 |
| RE 4 | +1 | +1 | +1 | +1 | +1 | -1 | +1 | -1 |
| RE 6 | +1 | +1 | -1 | -1 | +1 | -1 | -1 | +1 |
| RE 8 | +1 | +1 | +1 | +1 | +1 | -1 | +1 | -1 |
| RE 10 | +1 | +1 | -1 | -1 | +1 | -1 | -1 | +1 |

In conclusion, the type-1 single-symbol DMRS supports multiplexing of a maximum of four orthogonal ports (through the FDM and the FD-OCC), and the type-1 dual-symbol DMRS supports multiplexing of a maximum of eight orthogonal ports (through the FDM, the FD-OCC, and the TD-OCC).

Type-2 DMRS

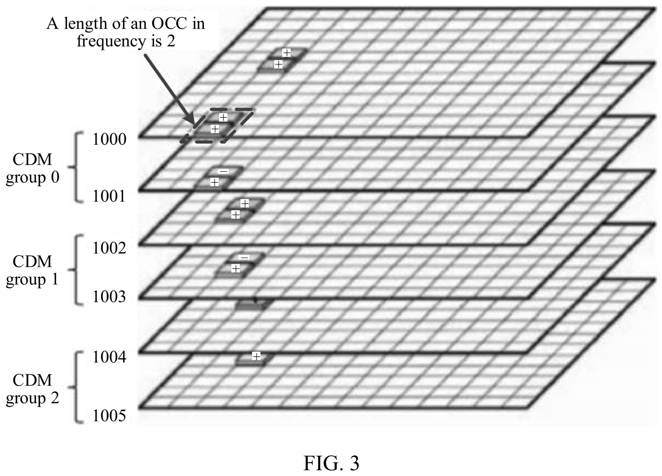

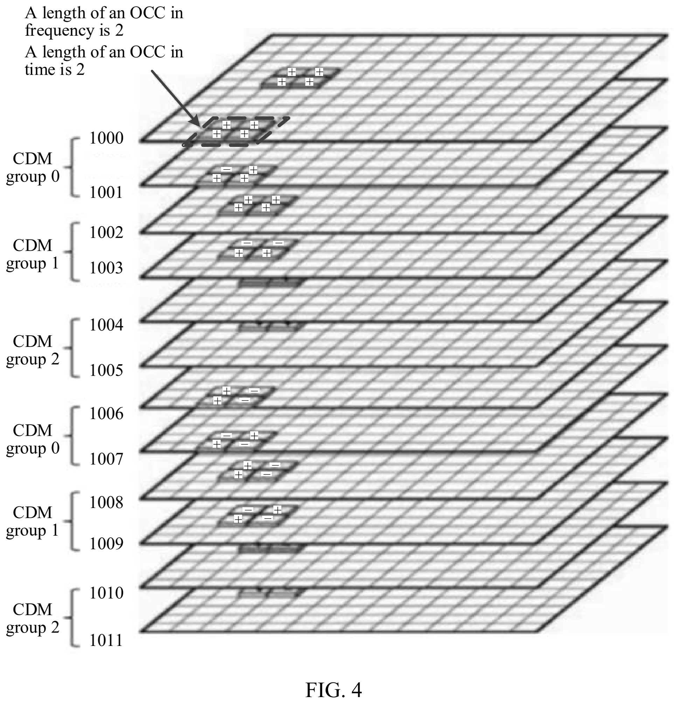

FIG. 3 is a diagram of another type-2 single-symbol DMRS according to an embodiment of this application. FIG. 4 is a diagram of another type-2 dual-symbol DMRS according to an embodiment of this application. Similarly, for the type-2 DMRS, in frequency domain, a DMRS sequence is mapped to two contiguous subcarriers every four subcarriers (or the DMRS sequence is mapped to two contiguous subcarriers in every six subcarriers). Therefore, a maximum of three orthogonal DMRS ports can be multiplexed in the FDM manner. In other words, three CDM groups are supported. As shown in FIG. 3, a port 1000 and a port 1001 belong to a CDM group 0, a port 1002 and a port 1003 belong to a CDM group 1, and a port 1004 and a port 1005 belong to a CDM group 2. Similar to the type-1 DMRS, a plurality of ports are orthogonal through code division multiplexing between different ports in the same CDM group.

In code domain, Release-15, Release-16, and Release-17 support an OCC with a length of 2, and a maximum of two orthogonal DMRS ports can be multiplexed in the code division multiplexing manner. For example, orthogonal codes that are of the port 1000 and that are mapped to all REs in one RB are sequentially {+1, +1, +1, +1}, and orthogonal codes that are of the port 1001 and that are mapped to all REs in one RB are sequentially {+1, -1, +1, -1}. In this case, the port 1000 and the port 1001 are orthogonal in code domain (where the type 1 and the type 2 are the same in code domain).

As shown in FIG. 3 and FIG. 4, in time domain, a DMRS supports two configuration manners: a single-symbol configuration manner and a dual-symbol configuration manner, and a maximum of two orthogonal DMRS ports can be multiplexed in the TD-OCC manner. For example, for four ports 1000, 1001, 1006, and 1007 in a same CDM group 0, on a 1st OFDM symbol and a 2nd OFDM symbol, orthogonal codes that are of each port and that are mapped to all REs in one RB are shown in Table 2.

Table 2

|  | 1000 | | 1001 | | 1006 | | 1007 | |
|---|---|---|---|---|---|---|---|---|
|  | Symbol 1 | Symbol 2 | Symbol 1 | Symbol 2 | Symbol 1 | Symbol 2 | Symbol 1 | Symbol 2 |
| RE 0 | +1 | +1 | +1 | +1 | +1 | -1 | +1 | -1 |
| RE 1 | +1 | +1 | -1 | -1 | +1 | -1 | -1 | +1 |
| RE 2 | +1 | +1 | +1 | +1 | +1 | -1 | +1 | -1 |
| RE 3 | +1 | +1 | -1 | -1 | +1 | -1 | -1 | +1 |

In conclusion, the type-2 single-symbol DMRS supports multiplexing of a maximum of six orthogonal ports (through the FDM and the FD-OCC), and the type-2 dual-symbol DMRS supports multiplexing of a maximum of 12 orthogonal ports (through the FDM, the FD-OCC, and the TD-OCC).

In conclusion, maximum quantities of orthogonal DMRS ports supported by current protocol releases (Release-15, Release-16, and Release-17) are shown in Table 3.

Table 3

|  | Type 1 | Type 2 |
|---|---|---|
| Single-symbol | 4 | 6 |
| Dual-symbol | 8 | 12 |

**DMRS enhancement:** One objective of DMRS (Demodulation reference signal, demodulation reference signal) enhancement proposed in a MIMO topic of the 3GPP Rel-18 is to increase a quantity of orthogonal DMRS ports to 24 without increasing DMRS overheads. For each DMRS type, both a maximum quantity of orthogonal ports for a single-symbol DMRS and a maximum quantity of orthogonal ports for a dual-symbol DMRS are doubled.

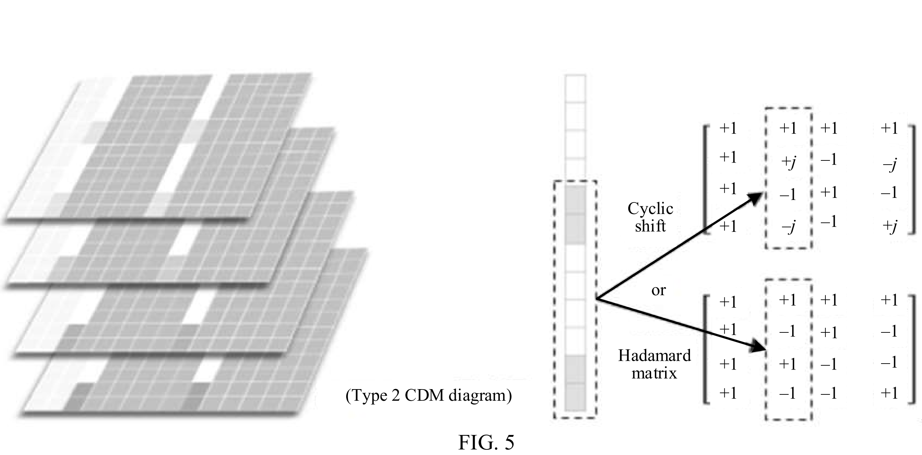

FIG. 5 is a diagram of an OCC-4 solution according to an embodiment of this application. As shown in FIG. 5, in the GPP Rel-18, a length of an FD-OCC code in an existing protocol is extended from 2 to 4 (that is, an OCC-4 solution), to increase a quantity of orthogonal DMRS ports that can be multiplexed in each CDM group. In this extension manner, for each DMRS type, both a maximum quantity of orthogonal ports for a single-symbol DMRS and a maximum quantity of orthogonal ports for a dual-symbol DMRS may be doubled.

**Physical downlink shared channel (Physical Downlink Shared Channel, PDSCH) processing delay:** In an existing new NR system, to ensure reliability of sending a signal, a HARQ technology is used, and a UE may determine, by using a parity bit added after a transmit signal, whether a signal is correctly received. When receiving of the signal is correct, the UE sends an ACK to a TRP. When an error occurs in the receiving, the UE sends a NACK to the TRP, to notify the TRP that the error occurs in the receiving, and a base station resends a signal to the UE subsequently. Because it takes time for a user equipment to process a signal, the PDSCH processing delay is defined in a current protocol. During downlink data transmission, a network device needs to indicate ACK/NACK feedback time of a HARQ to the UE, and the UE needs to feed back an ACK/a NACK within the specified ACK/NACK feedback time. A time interval between the ACK/NACK feedback time and PDSCH data receiving time (namely, time at which the UE receives PDSCH data) needs to be greater than the PDSCH processing delay.

When an FD-OCC code length of a DMRS that the UE is configured to receive is 4, in comparison with an existing DMRS whose FD-OCC code length is 2, the UE needs to perform a more complex operation to decode the DMRS, resulting in processing complexity that exceeds a processing capability of the UE, which is mainly reflected in the following two aspects.

In a first aspect, the processing delay is insufficient.

PDSCH demodulation needs to depend on performing channel estimation on a PDSCH channel by using a DMRS. An increase in an FD-OCC length of the DMRS causes an increase in DMRS decoding time, and further causes an increase in PDSCH channel estimation time. Therefore, the PDSCH processing delay is insufficient to support the UE in processing the PDSCH.

In addition, if the FD-OCC length of the DMRS may be indicated by using dynamic signaling downlink control information (Downlink Control Information, DCI), the UE first determines the FD-OCC length, and then selects an appropriate decoding algorithm to decode the DMRS, which further increases time of processing the PDSCH.

In conclusion, when the FD-OCC code length is 2, the UE only needs to distinguish two DMRS ports by using a demodulation algorithm, but when the FD-OCC code length is 4, the UE needs to distinguish four DMRS ports by using the demodulation algorithm. This increases algorithm complexity and an operation amount, and consequently causes a problem that complexity of the UE is increased, and the needed processing complexity exceeds the processing capability of the UE.

In a second aspect, the processing capability is insufficient.

Hardware complexity varies with different quantities of receive antennas configured or enabled by a terminal device. In addition, for different quantities of receive antennas or different quantities of received data flows, complexity needed by the terminal device when processing a DMRS is also different. The terminal device can currently support a maximum of eight downlink receive antennas, that is, eight downlink antennas (Rx), and a maximum of supported FD-OCC length of a DMRS is 2. After the FD-OCC length of the DMRS is extended to 4, if the terminal device is still required to support eight downlink receive antennas, more processing complexity is needed. Therefore, for a specific quantity of receive antennas, processing complexity needed when the FD-OCC length of the DMRS is 4 is higher, and a problem that the processing capability of the UE is exceeded may occur.

In addition, the FD-OCC length is increased, and the processing complexity of the UE is increased. Therefore, the UE expects that R18 DMRS ports of the same UE are first scheduled in a CDM group (CDM group), and then scheduled between CDM groups. However, in single-DCI non-coherent joint transmission (non-coherent joint transmission, NCJT) of a protocol release 16, two CDM groups are definitely scheduled, and each CDM group includes a maximum of two flows. Therefore, in a single-DCI NCJT scenario, after a quantity of DMRS ports is extended in R18, a problem of excessively high complexity of the UE is inevitably caused.

In conclusion, a solution needs to be designed to determine a capability needed for performing a decoding operation on a DMRS.

To resolve the technical problem that the processing complexity needed for performing the decoding operation on the DMRS exceeds the processing capability of the UE, an embodiment of this application provides a capability information determining method. In the method, a network device sends first indication information to a terminal device, and determines capability information of a reference signal based on the first indication information. Similarly, the terminal device receives the first indication information sent by the network device, and determines the capability information of the reference signal based on the first indication information. The first indication information indicates at least one of a code length, a type, a port number, and a time resource of the reference signal. In embodiments of this application, time resources in a relax order capability are saved, accuracy of the determined processing capability of the UE is improved, and it is ensured that the reference signal can be processed by using the determined processing capability of the UE.

The following describes implementations of embodiments of this application in detail with reference to accompanying drawings in this specification.

The capability information determining method provided in embodiments of this application may be applied to any communication system. The communication system may be a third generation partnership project (third generation partnership project, 3GPP) communication system, for example, a long term evolution (long term evolution, LTE) system, may be a 5G mobile communication system, an NR communication system, or a new radio vehicle-to-everything (vehicle-to-everything, NR V2X) system. The capability information determining method may be further applied to an LTE and 5G hybrid networking system, or may be applied to a non-terrestrial network (non-terrestrial network, NTN) system, a device-to-device (device-to-device, D2D) communication system, a machine-to-machine (machine-to-machine, M2M) communication system, the internet of things (internet of things, IoT), and another next generation communication system, for example, a future communication system like 6G. Alternatively, the communication system may be a non-3GPP communication system. This is not limited.

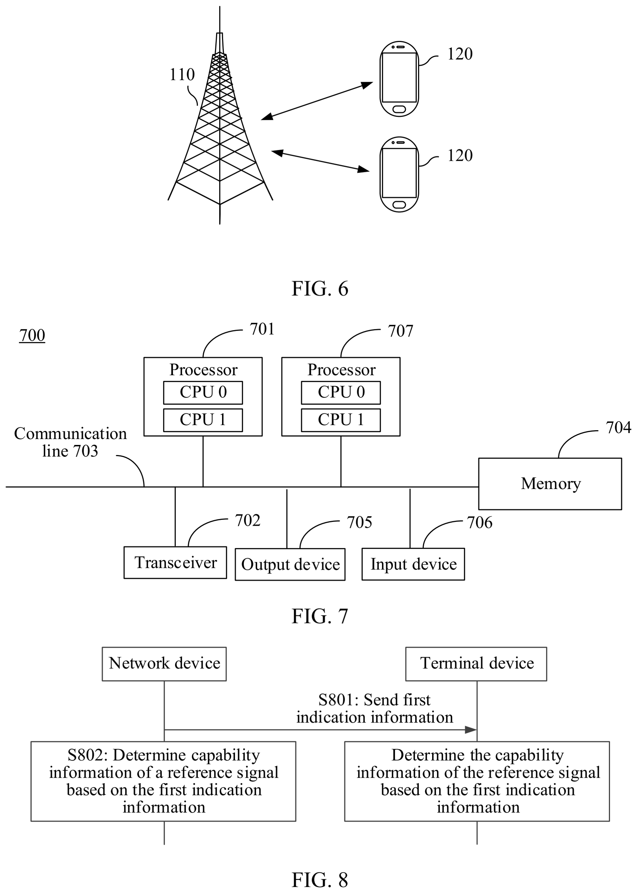

The following uses FIG. 6 as an example to describe the communication system provided in embodiments of this application.

FIG. 6 is a diagram of a communication system according to an embodiment of this application. As shown in FIG. 6, the communication system may include a network device 110 and at least one terminal device 120 located in a coverage area of the network device 110. FIG. 6 shows one network device 110 and two terminal devices 120 for description.

Optionally, the communication system may include a plurality of network devices 110, and another quantity of terminal devices 120 may be included in a coverage area of each network device. A quantity of network devices 110 and a quantity of terminal devices 120 included in the communication system are not limited in this embodiment of this application.

The network device in this embodiment of this application may be configured to provide a wireless communication function for the terminal device, that is, the network device may include various forms of macro base stations, micro base stations (also referred to as small cells), relay stations, access points, and the like. In systems using different radio access technologies, names of the network device may vary, for example, may be a base transceiver station (Base Transceiver Station, BTS) in a global system for mobile communications (Global System for Mobile Communications, GSM) or code division multiple access (Code Division Multiple Access, CDMA) network, an NB (NodeB) in wideband code division multiple access (Wideband Code Division Multiple Access, WCDMA), or an eNB or eNodeB (Evolved NodeB) in long term evolution (Long Term Evolution, LTE). Alternatively, the network device may be a radio controller in a CRAN (Cloud Radio Access Network, cloud radio access network) scenario, may be a base station device in a future 5G network or a network device in a future evolved public land mobile network (Public Land Mobile Network, PLMN) network, may be a wearable device or a vehicle-mounted device, or may be a TRP. A specific technology and a specific device form that are used by the network device are not limited in embodiments of this application. For ease of description, in all embodiments of this application, the foregoing apparatuses that provide the wireless communication function for the terminal device are collectively referred to as network devices.

In embodiments of this application, the terminal device in FIG. 6 may be a device having a wireless transceiver function or a chip or a chip system that may be disposed in the device, may allow a user to access a network, and is a device configured to provide voice and/or data connectivity for the user. The terminal device may be located at a fixed location, or may be mobile. The terminal device may include various handheld devices, vehicle-mounted devices, wearable devices, or computing devices that have a wireless communication function, or other processing devices connected to a wireless modem. The terminal may be a mobile station (Mobile Station, MS), a subscriber unit (subscriber unit), a cellular phone (cellular phone), a smartphone (smartphone), a wireless data card, a personal digital assistant (Personal Digital Assistant, PDA) computer, a tablet computer, a wireless modem (modem), a handheld device (handset), a laptop computer (laptop computer), a machine type communication (Machine Type Communication, MTC) terminal, or the like.

Optionally, the network device and the terminal device may be deployed on land, including an indoor or outdoor device, a handheld device, or a vehicle-mounted device; may be deployed on a water surface; or may be deployed on an aircraft, a balloon, or an artificial satellite in the air. Application scenarios of the network device and the terminal device are not limited in embodiments of this application.

Optionally, transmission between the network device and the terminal device may be performed through a radio wave, or communication between the network device and the terminal device may be performed through a transmission medium such as visible light, a laser, infrared, or an optical fiber. For example, the network device and the terminal device may communicate with each other over a licensed spectrum (licensed spectrum), may communicate with each other over an unlicensed spectrum (unlicensed spectrum), or may communicate with each other over both the licensed spectrum and the unlicensed spectrum. The communication between the network device and the terminal device and the communication between the terminal devices may be performed by using a spectrum below 7 gigahertz (Mega Hertz, MHz), a spectrum above 7 MHz, or both the spectrum below 7 MHz and the spectrum above 7 MHz. A spectrum resource used between the network device and the terminal device is not limited in embodiments of this application.

It should be noted that the terminal device and the network device in embodiments of this application each may be one or more chips, or may be a system on chip (system on chip, SoC), or the like. FIG. 6 is merely an example figure, and a quantity of devices included in FIG. 6 is not limited. In addition, in addition to the device shown in FIG. 6, the communication system may further include other network devices, for example, a core network device, a wireless relay device, and a wireless backhaul device, or may include other network entities such as a network controller and a mobility management entity. This is not limited in this embodiment of this application. Names of the devices and links in FIG. 6 are not limited. In addition to the names shown in FIG. 6, the devices and the links may alternatively have other names. This is not limited.

During specific implementation, as shown in FIG. 6, for example, each terminal device and each network device may use a composition structure shown in FIG. 7, or include components shown in FIG. 7. FIG. 7 is a diagram of composition of a communication apparatus according to an embodiment of this application. The communication apparatus 700 may be a terminal device, or a chip or a system on chip in the terminal device; or may be a network device, or a chip or a system on chip in the network device. As shown in FIG. 7, the communication apparatus 700 includes a processor 701, a transceiver 702, and a communication line 703.

Further, the communication apparatus 700 may further include a memory 704. The processor 701, the memory 704, and the transceiver 702 may be connected through the communication line 703.

The processor 701 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 701 may be another apparatus having a processing function, for example, a circuit, a component, or a software module. This is not limited.

The transceiver 702 is configured to communicate with another device or another communication network. The another communication network may be an Ethernet, a radio access network (radio access network, RAN), a wireless local area network (wireless local area network, WLAN), or the like. The transceiver 702 may be a module, a circuit, a transceiver, or any apparatus that can implement communication.

The communication line 703 is configured to perform information transmission between the components included in the communication apparatus 700.

The memory 704 is configured to store instructions. The instructions may be computer programs.

The memory 704 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 704 may exist independently of the processor 701, or may be integrated with the processor 701. The memory 704 may be configured to store instructions, program code, some data, or the like. The memory 704 may be located inside the communication apparatus 700, or may be located outside the communication apparatus 700. This is not limited. The processor 701 is configured to execute the instructions stored in the memory 704, to implement a capability information determining method provided in the following embodiment of this application.

In an example, the processor 701 may include one or more CPUs, for example, a CPU 0 and a CPU 1 in FIG. 7.

In an optional implementation, the communication apparatus 700 includes a plurality of processors. For example, in addition to the processor 701 in FIG. 7, the communication apparatus 700 may further include a processor 707.

In an optional implementation, the communication apparatus 700 further includes an output device 705 and an input device 706. For example, the input device 706 is a device, for example, a keyboard, a mouse, a microphone, or a joystick, and the output device 705 is a device, for example, a display or a speaker (speaker).

It should be noted that the communication apparatus 700 may be a desktop computer, a portable computer, a network server, a mobile phone, a tablet computer, a wireless terminal, an embedded device, a chip system, or a device having a structure similar to that in FIG. 7. In addition, a composition structure shown in FIG. 7 does not constitute a limitation on the communication apparatus. In addition to the components shown in FIG. 7, the communication apparatus may include more or fewer components than those shown in the figure, or some components may be combined, or different component arrangements may be used.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 6, refer to FIG. 8, a capability information determining method provided in an embodiment of this application is described. A terminal device may be any terminal device in the communication system shown in FIG. 6, and a network device may be the network device in the communication system shown in FIG. 6. The terminal device and the network device described in the following embodiments may have the components shown in FIG. 6. Processing performed by a single execution body (the terminal device or the network device) shown in embodiments of this application may alternatively be performed by a plurality of execution bodies. These execution bodies may be logically and/or physically separated. This is not limited.

FIG. 8 is a flowchart of a capability information determining method according to an embodiment of this application. As shown in FIG. 8, the method may include the following steps.

S801: The network device sends first indication information.

In a possible implementation, the network device may send the first indication information to the terminal device. Correspondingly, the terminal device receives the first indication information from the network device.

The first indication information indicates at least one of a code length, a type, a port number, and a time resource of a reference signal.

In a possible implementation, the first indication information is included in higher layer signaling, or the first indication information is indicated by using the higher layer signaling. The higher layer signaling is radio resource control (radio resource control, RRC) signaling or medium access control control element (medium access control control element, MAC CE) signaling. For example, the first indication information is indicated by using the RRC. For another example, the first indication information is indicated by using the MAC CE.

In another possible implementation, the first indication information is included in dynamic signaling, or the first indication information is indicated by using the dynamic signaling. The dynamic signaling may be DCI. For example, the first indication information is indicated by using the DCI.

The reference signal is an uplink reference signal or a downlink reference signal. For example, the reference signal is a channel sounding reference signal (Sounding Reference Signal, SRS). For another example, the reference signal is a channel state information reference signal (Channel State Information Reference Signal, CSI-RS). For another example, the reference signal is an uplink demodulation reference signal (Demodulation Reference Signal, DMRS), or the reference signal is a downlink DMRS.

A code of the reference signal is any one of the following codes: an orthogonal code, an orthogonal cover code, a mask, a Walsh (Walsh) code, or a cyclic shift code. For example, the code of the reference signal may be an FD-OCC or a TD-OCC. A candidate value of the code length of the reference signal includes 2 and 4.

The type of the reference signal is a reference signal configuration type or a reference signal type. For example, the reference signal is a DMRS. A type of the DMRS includes at least one of the following: a DMRS configuration type 1 (DMRS configuration type 1), a DMRS configuration type 2 (DMRS configuration type 2), a DMRS configuration enhancement type 1 (DMRS configuration etype 1), a DMRS configuration enhancement type 2 (DMRS configuration etype 2), a DMRS enhancement type 1 (DMRS etype 1), and a DMRS enhancement type 2 (DMRS etype 2). The DMRS configuration type 1 and the DMRS configuration type 2 represent a DMRS defined by a protocol of an earlier version (a protocol earlier than a protocol release 18, for example, a protocol release 15), and the DMRS enhancement type 1 and the DMRS enhancement type 2 represent a DMRS defined by a protocol of a later version (for example, the protocol release 18). Alternatively, a DMRS enhancement type indicates that a maximum quantity of orthogonal DMRS ports supported by the DMRS enhancement type is greater than a maximum quantity of orthogonal DMRS ports supported by a DMRS configuration type. Alternatively, a DMRS enhancement type indicates that processing needed for the DMRS enhancement type is more complex than processing needed for a DMRS configuration type. A name of the DMRS enhancement type is not limited in this application. Optionally, the type of the reference signal may alternatively indicate whether the reference signal is the uplink reference signal or the downlink reference signal.

Optionally, the type of the reference signal may alternatively include a first type and a second type. The first type includes the DMRS configuration type 1 and the DMRS configuration type 2, and the second type includes the DMRS configuration enhancement type 1, the DMRS configuration enhancement type 2, the DMRS enhancement type 1, and the DMRS enhancement type 2.

It should be understood that that the first indication information indicates the code length of the reference signal is equivalent to that the first indication information indicates the type of the reference signal. For example, that the code length of the reference signal is 4 is equivalent to that the type of the reference signal is an enhancement type (namely, the DMRS configuration enhancement type 1 or the DMRS configuration enhancement type 2). For another example, that the code length of the reference signal is 4 is equivalent to that a protocol release corresponding to the reference signal is release 18.

The port number of the reference signal is a number of a port used to transmit the reference signal. A port number of the uplink reference signal may be included in 0 to 23. For example, the port number of the reference signal is one or more of 8 to 15. For another example, the port number of the reference signal is one or more of 12 to 23. A port number of the downlink reference signal may be included in 1000 to 1023. For example, the port number of the reference signal is one or more of 1008 to 1015. For another example, the port number of the reference signal is one or more of 1012 to 1023.

It should be understood that that the first indication information indicates the port number of the reference signal is equivalent to that the first indication information indicates the type of the reference signal. For example, that the port number of the reference signal is one or more of 8 to 15 is equivalent to that the type of the reference signal is an enhancement type (namely, the DMRS configuration enhancement type 1 or the DMRS configuration enhancement type 2).

Similarly, that the first indication information indicates the code length of the reference signal is equivalent to that the first indication information indicates the port number of the reference signal. For example, that the port number of the reference signal is one or more of 8 to 15 is equivalent to that the code length of the reference signal is 4. For another example, that the port number of the reference signal is one or more of 1 to 7 is equivalent to that the code length of the reference signal is 2. The time resource of the reference signal is a time position used to transmit the reference signal. For example, the reference signal is a front loaded (front loaded) reference signal or an additional (additional) reference signal. For another example, the reference signal is a single-column reference signal or a dual-column reference signal.

In another possible implementation, that the first indication information indicates the code length of the reference signal is equivalent to that the first indication information indicates the time position of the reference signal. For example, that the reference signal is the front loaded reference signal is equivalent to that the code length of the reference signal is 4. For another example, that the reference signal is the single-column reference signal is equivalent to that the code length of the reference signal is 4.

In a possible implementation, the code length of the reference signal is equivalent to the type of the reference signal. The code length of the reference signal is equivalent to the port number of the reference signal. The code length of the reference signal is equivalent to the time resource of the reference signal.

S802: The network device determines capability information of the reference signal based on the first indication information. Correspondingly, after receiving the first indication information, the terminal device determines the capability information of the reference signal based on the first indication information.

The capability information includes first capability information and/or second capability information, the first capability information includes processing capability information of a physical downlink channel corresponding to the reference signal, and the second capability information includes antenna information corresponding to the reference signal.

The processing capability information of the physical downlink channel indicates a time unit needed for processing the physical downlink channel. Alternatively, the processing capability information of the physical downlink channel indicates a time unit needed for HARQ-ACK timing.

The processing capability information of the physical downlink channel is a terminal device processing capability or a reference signal processing capability.

The antenna information includes at least one of the following: a quantity of antennas used to transmit the reference signal, a quantity of antenna branches (branches) used to transmit the reference signal, a quantity of antenna ports used to transmit the reference signal, a quantity of reference signal flows, a quantity of reference signal layers, a quantity of data flows corresponding to the reference signal, and a quantity of data layers corresponding to the reference signal. Optionally, the antenna information is reported by using a UE capability. Alternatively, the antenna information is configured by using RRC or a MAC CE. Alternatively, the antenna information is indicated by using DCI.

In this embodiment of this application, the quantity of antennas is equivalent to the quantity of antenna ports. Alternatively, the quantity of antennas is equivalent to a quantity of flows. The quantity of flows is the quantity of reference signal flows or the quantity of data flows. Alternatively, the quantity of antennas is equivalent to a quantity of layers. The quantity of layers is the quantity of reference signal layers or the quantity of data layers. Alternatively, the quantity of antennas is equivalent to the quantity of antenna branches.

For example, when the antenna information includes the quantity of antennas used to transmit the reference signal, the quantity of antennas is a quantity of receive antennas used to receive the reference signal, or a quantity of receive antenna ports used to receive the reference signal.

The physical downlink channel corresponding to the reference signal is equivalent to the physical downlink channel associated with the reference signal. For example, the reference signal and the corresponding physical downlink channel are scheduled by using same DCI. For another example, the reference signal and the corresponding physical downlink channel are in a same time unit. The time unit is one or more of the following: a symbol, a slot, a mini slot (mini slot), a frame (frame), a subframe (subframe), and a half-frame (half-frame).

Optionally, time of processing the physical downlink channel may be further determined based on the processing capability information of the physical downlink channel. Alternatively, time of a HARQ-ACK is determined based on the processing capability information of the physical downlink channel.

Optionally, the network device sends second indication information to the terminal device, and determines, based on the second indication information, that a time interval between a first physical resource and a second physical resource is T. T is greater than or equal to a first time length. Optionally, the first time length is determined based on the first capability information of the reference signal. Alternatively, the first time length is determined based on the code length of the reference signal. It should be understood that the first time length is the time of processing the physical downlink channel.

Optionally, the code length of the reference signal and the first time length meet:

when the code length of the reference signal is 4, the first time length is T1; or
when the code length of the reference signal is 2, the first time length is T2, where
both T1 and T2 are positive integers, and T1 is greater than T2.

Optionally, T1 is a sum of T2 and a preset symbol length. Optionally, the preset symbol length is one symbol. Alternatively, the preset symbol length is greater than one symbol.

In a possible implementation, T2 is HARQ-ACK timing K1, and the preset symbol length is one time unit. For example, the preset symbol length is one symbol.

Based on the foregoing implementations, T1 can meet a time requirement of a UE for processing an FD-OCC whose length is 4. In addition, time of processing the FD-OCC whose length is 4 is increased by one symbol compared with time of processing an FD-OCC whose length is 2, and no time waste is caused.

Based on the foregoing content, the following specifically describes this embodiment of this application from two aspects of the first capability information and the second capability information.

In the following aspects, an example in which the first indication information indicates the code length of the reference signal is used for description. It should be understood that as described in the foregoing content, that the first indication information indicates the code length of the reference signal is equivalent to that the first indication information indicates the type of the reference signal, is equivalent to that the first indication information indicates the port number of the reference signal, and is equivalent to that the first indication information indicates the time resource of the reference signal. Therefore, when the first indication information indicates at least one of the type, the port number, and the time resource of the reference signal, possible implementations in the following aspects are also applicable.

**In a first aspect, the first capability information is determined, and the time of processing the physical downlink channel is determined based on the first capability information.**

In a possible implementation, the network device receives first capability reporting information sent by the terminal device, and determines the first capability information of the reference signal based on the first indication information and the first capability reporting information.

Similarly, the terminal device may also determine the first capability information of the reference signal based on the first capability reporting information and the received first indication information sent by the network device.

Optionally, in this application, a reporting granularity of the first capability reporting information is a feature set FeatureSet. Alternatively, a reporting granularity of the first capability reporting information is that the first capability reporting information is reported once per band per band combination (per band per BC).

Optionally, the terminal device may report a total quantity of carriers that can support the capability on one frequency band.

Based on the implementation, the terminal device may report capability information per band per band combination, and capability reporting is more accurate. In addition, the reporting granularity is not too fine, to avoid waste of reporting signaling overheads.

In a possible implementation, when reporting a supported type of a reference signal, the terminal device reports the supported type of the reference signal per band per band combination (per band per BC), or reports a group of values per band per band combination (per band per BC). Alternatively, when reporting a supported code length of a reference signal, the terminal device reports the supported code length of the reference signal per band per band combination (per band per BC), or reports a group of values per band per band combination (per band per BC).

Based on the implementation, the terminal device may report capability information per band per band combination, and capability reporting is more accurate. In addition, the reporting granularity is not too fine, to avoid waste of reporting signaling overheads.

In this possible implementation, the first capability information of the reference signal may be determined based on the first indication information and the first capability reporting information by using the following several possible designs.

In a first possible design, the first capability reporting information indicates whether a first processing capability is supported when the code length of the reference signal is 4.

The first processing capability may be a terminal device processing capability 2, a terminal device processing capability #2, a reference signal processing capability #2, or a reference signal processing capability 2. For example, when a physical channel is a PDSCH, the first processing capability may be the terminal device processing capability 2, the terminal device processing capability #2, a PDSCH processing capability #2, or a PDSCH processing capability 2.

For example, the first processing capability is represented as Cap2. It should be understood that the first processing capability is an optional UE capability, that is, the UE may report supporting or not supporting the first processing capability. Alternatively, that the UE reports the capability indicates that the UE reports supporting the capability.

Optionally, the first capability reporting information further indicates whether a second processing capability is supported when the code length of the reference signal is 4.

The second processing capability may be a terminal device processing capability 1, a terminal device processing capability #1, a reference signal processing capability #1, or a reference signal processing capability 1. For example, when a physical channel is a PDSCH, the second processing capability may be the terminal device processing capability 1, the terminal device processing capability #1, a PDSCH processing capability #1, or a PDSCH processing capability 1. For example, the second processing capability is represented as Cap1. Optionally, the second processing capability is a mandatory UE capability, that is, the UE needs to support the second processing capability.

During specific implementation, the first capability reporting information further indicates whether the terminal device supports the code length 4 of the reference signal. It should be understood that the first capability reporting information is an optional UE capability, that is, the UE may report supporting or not supporting the code length 4 of the reference signal. Alternatively, the UE reporting the first capability reporting information indicates that the UE reports supporting the code length 4 of the reference signal. A reported value of the first capability reporting information further includes a supported processing capability. For example, the reported value of the first capability reporting information includes one of the following: When the code length of the reference signal is 4, only the second processing capability is supported (the reported value is Cap1-only); and when the code length of the reference signal is 4, the first processing capability and the second processing capability are supported (the reported value is {Cap1, Cap2}). For another example, the reported value of the first capability reporting information includes whether the first processing capability is supported when the code length of the reference signal is 4 (the reported value is: Whether Cap2 is supported).

Optionally, the first capability reporting information further indicates whether the second type of the reference signal is supported.

In a second possible design, the first capability reporting information indicates whether the terminal device separately supports the code length 4 of the reference signal when supporting a first processing capability and a second processing capability.

During specific implementation, the first capability reporting information further indicates whether the terminal device supports the code length 4 of the reference signal. A reported value of the first capability reporting information further includes a supported processing capability. For example, the reported value of the first capability reporting information includes any one of the following: Whether the terminal device supports the code length 4 of the reference signal when supporting the first processing capability (whether Cap2 supports the code length 4 of the reference signal), and whether the terminal device supports the code length 2 of the reference signal when supporting the second processing capability (whether Cap1 supports the code length 4 of the reference signal).

A manner of sending the first capability reporting information by the terminal device to the network device is predefined. For example, a UE processing capability 1 and a UE processing capability 2 are separately reported. The UE supports the UE processing capability 1 and the UE processing capability 2. Optionally, this may be implemented by using a protocol "separately reported for UE processing capability 1 and for UE processing capability 2 if UE supports both processing capabilities".

Based on the foregoing implementations, it can be ensured that when the code length of the reference signal is 4, a downlink channel processing capability of the UE is not exceeded.

Optionally, the first capability reporting information further indicates whether the code length 4 of the reference signal is supported.

In a third possible design, the first capability reporting information indicates whether the terminal device supports the code length 4 of the reference signal when supporting a first processing capability.

Optionally, the first capability reporting information further indicates whether the terminal device supports the second type of the reference signal.

A manner of sending the first capability reporting information by the terminal device to the network device is predefined. The terminal device sending the first capability reporting information to the network device depends on a case in which the terminal device sends fourth capability reporting information to the network device, where the fourth capability reporting information indicates whether the terminal device supports the UE processing capability 2. Alternatively, the terminal device sending the first capability reporting information to the network device is limited by a case in which the terminal device sends fourth capability reporting information to the network device, where the fourth capability reporting information indicates whether the terminal device supports the UE processing capability 2. For example, the terminal device sends the first capability reporting information only when the fourth capability reporting information indicates that the terminal device supports the UE processing capability 2. For another example, only when the fourth capability reporting information indicates that the terminal device supports the UE processing capability 2, the first capability reporting information is applied, or the first capability reporting information takes effect.

In the foregoing three possible designs, the processing time of the physical downlink channel may be determined based on the first capability information by using the following Formula (2):

$$\text{Formula (2):} \quad T_{\text{proc},1} = \left(N_1 + d_{1,1} + d_2\right)(2048 + 144) \cdot \kappa 2^{-\mu} \cdot T_c + T_{\text{ext}},$$

where

$T_{\text{proc},1}$ represents the first time length (namely, the time of processing the physical downlink channel), $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $\mu$ is a value related to a subcarrier spacing, the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal, and $T_{\text{ext}}$ is an extended time length.

$\mu$ corresponds to one of ($\mu$PDCCH, $\mu$PDSCH, $\mu$UL) that make a value of $T_{\text{proc},1}$ largest. $\mu$PDCCH corresponds to a subcarrier spacing of a PDCCH that schedules a PDSCH, $\mu$PDSCH corresponds to a subcarrier spacing of the scheduled PDSCH, and $\mu$UL corresponds to a subcarrier spacing of an uplink channel for transmitting a HARQ-ACK.

Specifically, to ensure that the terminal device has sufficient time to receive a physical channel, so as to ensure that valid HARQ-ACK information can be provided, whether the terminal device feeds back the HARQ-ACK information on a physical uplink channel indicated by the network device is determined according to the following rules: Considering allocated HARQ-ACK timing K1 and impact of a used physical uplink channel resource including a timing advance, start time of a 1st uplink symbol of the physical uplink channel carrying the HARQ-ACK information cannot be earlier than L1, where L1 is defined as a next uplink symbol, and a cyclic prefix (Cyclic prefix, CP) of the uplink symbol starts after $T_{\text{proc},1} = (N_1 + d_{1,1} + d_2)(2048 + 144) \cdot \kappa_2^{-\mu} \cdot T_c + T_{\text{ext}}$ time after a last symbol of a physical downlink channel carrying a transport block (Transport block, TB) ends.

$N_1$ is time determined based on a mapping relationship between $N_1$ and $\mu$, and the mapping relationship between $N_1$ and $\mu$ is determined based on the first capability information. For example, the mapping relationship between $N_1$ and $\mu$ may be represented by using the following Table 4 and Table 5.

For example, assuming that the first capability information indicates that a processing capability of the terminal device for processing the reference signal is the first processing capability, the mapping relationship between $N_1$ and $\mu$ may be represented by using Table 4.

Table 4

| $\mu$ | PDSCH decoding time $N_1$ [symbols] |
| --- | --- |
| | dmrs-AdditionalPosition=pos0 in DMRS-DownlinkConfig in both of dmrs-DownlinkForPDSCH-MappingTypeA, dmrs-DownlinkForPDSCH-MappingTypeB |
| 0 | 3 |
| 1 | 4.5 |
| 2 | 9 for frequency range 1 |

For example, assuming that the first capability information indicates that the processing capability of the terminal device for processing the reference signal is the second processing capability, the mapping relationship between $N_1$ and $\mu$

may be represented by using Table 5.

Table 5

| $\mu$ | PDSCH decoding time $N_1$ [symbols] | |
| --- | --- | --- |
| | dmrs-AdditionalPosition=pos0 in DMRS-DownlinkConfig in both of dmrs-DownlinkForPDSCH-MappingTypeA, dmrs-DownlinkForPDSCH-MappingTypeB | dmrs-AdditionalPosition≠pos0 in DMRS-DownlinkConfig in either of dmrs-DownlinkForPDSCH-MappingTypeA, dmrs-DownlinkForPDSCH-MappingTypeB, or if the higher layer parameter is not configured |
| 0 | 8 | $N_{1,0}$ |
| 1 | 10 | 13 |
| 2 | 17 | 20 |
| 3 | 20 | 24 |

dmrs-AdditionalPosition=pos (position) 0 indicates that an additional position of a DMRS is located on pos0. $N_{1,0}$ is determined based on the additional DMRS position of the PDSCH. When the additional DMRS position is equal to 12, a value of $N_{1,0}$ is 14. Otherwise, the value of $N_{1,0}$ is 13.

DMRS-DownlinkConfig in both of dmrs-DownlinkForPDSCH-MappingTypeA, dmrs-DownlinkForPDSCH-MappingTypeB indicates that a downlink configuration parameter of the DMRS is configured in both a mapping type A of a downlink PDSCH and a mapping type B of the downlink PDSCH.

dmrs-AdditionalPosition≠pos0 indicates that an additional position of the DMRS is not on pos 0. DMRS-DownlinkConfig in either of dmrs-DownlinkForPDSCH-MappingTypeA, dmrs-DownlinkForPDSCH-MappingTypeB, or if the higher layer parameter is not configured indicates that a downlink configuration parameter of the DMRS is configured in either the mapping type A of the downlink PDSCH or the mapping type B of the downlink PDSCH, or is not configured in a higher layer protocol.

9 for frequency range 1 indicates that when a frequency range is 1, a value of $N_1$ is 9.

In a fourth possible design, the first capability reporting information indicates whether a first processing capability is supported and whether the code length 4 of the reference signal is supported.

In this design, if the code length of the reference signal is 2, Formula (2) may be used for implementation.

In this design, if the code length of the reference signal is 4, Formula (1) or (2) may be used for implementation.

$$\text{Formula (1): } T_{proc,1} = (N_1 + d_{1,1} + d_2 + d_3)(2048 + 144) \cdot \kappa 2^{-\mu} \cdot T_c + T_{ext},$$

where $d_3$ is preset first time or is first time reported by the UE. For example, $d_3 = 1$.

$$\text{Formula (2): } T_{proc,1} = (N_1 + d_{1,1} + d_2)(2048 + 144) \cdot \kappa 2^{-\mu} \cdot T_c + T_{ext}.$$

When the code length of the reference signal is 4, in Formula (2), $N_1$ is time obtained by adding preset second time to time determined based on a mapping relationship between $N_1$ and $\mu$, and the mapping relationship between $N_1$ and $\mu$ is determined based on the first capability information.

For example, when the code length of the reference signal is 4, and a first time length is determined by using Formula (1), the mapping relationship between $N_1$ and $\mu$ may be represented by using Table 6 and Table 5.

For example, when the code length of the reference signal is 4, and a first time length is determined by using Formula (2), assuming that the first capability information indicates that the processing capability of the terminal device for processing the reference signal is the first processing capability, the mapping relationship between $N_1$ and $\mu$ may be represented by using Table 6.

Table 6

| $\mu$ | Time $N_1$ at which a terminal device decodes a PDSCH (PDSCH decoding time $N_1$ [symbols]) |
| --- | --- |
| | dmrs-AdditionalPosition=pos0 in DMRS-DownlinkConfig in both of dmrs-DownlinkForPDSCH-MappingTypeA, dmrs-DownlinkForPDSCH-MappingTypeB |
| 0 | $3+d_\mu$ |
| 1 | $4.5+d_\mu$ |

(continued)

| $\mu$ | Time $N_1$ at which a terminal device decodes a PDSCH (PDSCH decoding time $N_1$ [symbols]) |
|---|---|
| | dmrs-AdditionalPosition=pos0 in DMRS-DownlinkConfig in both of dmrs-DownlinkForPDSCH-MappingTypeA, dmrs-DownlinkForPDSCH-MappingTypeB |
| 2 | $9+d_\mu$ for frequency range 1 |

For example, when the code length of the reference signal is 4, and a first time length is determined by using Formula (2), assuming that the first capability information indicates that the processing capability of the terminal device for processing the reference signal is the second processing capability, the mapping relationship between $N_1$ and $\mu$ may be represented by using Table 7.

Table 7

| $\mu$ | Time $N_1$ at which a terminal device decodes a PDSCH (PDSCH decoding time $N_1$ [symbols]) | |
|---|---|---|
| | dmrs-AdditionalPosition=pos0 in DMRS-DownlinkConfig in both of dmrs-DownlinkForPDSCH-MappingTypeA, dmrs-DownlinkForPDSCH-MappingTypeB | dmrs-AdditionalPosition≠pos0 in DMRS-DownlinkConfig in either of dmrs-DownlinkForPDSCH-MappingTypeA, dmrs-DownlinkForPDSCH-MappingTypeB, or if the higher layer parameter is not configured |
| 0 | $8+d_\mu$ | $N_{1,0}+d_\mu$ |
| 1 | $10+d_\mu$ | $13+d_\mu$ |
| 2 | $17+d_\mu$ | $20+d_\mu$ |
| 3 | $20+d_\mu$ | $24+d_\mu$ |

$d_\mu$ is the preset second time.

In another possible implementation, the network device may determine the first capability information of the reference signal based on the first indication information and first predefined information. Similarly, after receiving the first indication information sent by the network device, the terminal device determines the first capability information of the reference signal based on the first indication information and the first predefined information. The first predefined information is that when the code length of the reference signal is 4, a capability of processing the physical downlink channel corresponding to the reference signal is a second processing capability. In other words, the first capability information is determined based on the first indication information and the first predefined information.

The first predefined information is that if the code length of the reference signal is 4, the terminal device defaults to processing time of the UE processing capability 1. Optionally, the first capability reporting information indicates that the terminal device supports the UE processing capability 2.

Alternatively, the first predefined information is that if the code length of the reference signal is 4, the terminal device does not support the UE processing capability 2. Optionally, the first capability reporting information indicates that the terminal device supports the UE processing capability 2.

Optionally, the first predefined information may alternatively be that when the terminal device supports the first processing capability and the second processing capability, and the code length of the reference signal is 4, the physical downlink channel corresponding to the reference signal is not applicable to the first processing capability.

In this implementation, the time of processing the physical downlink channel is determined based on the first capability information by using Formula (2), and the mapping relationship between $N_1$ and $\mu$ may be represented by using Table 6 and Table 5.

UEs with different capabilities of processing the physical downlink channel need different time of processing the physical downlink channel. Processing time needed by a UE with the second processing capability is less than processing time needed by a UE with the first processing capability. In other words, the UE with the first processing capability has a higher requirement on a processing delay. In this embodiment of this application, a problem that different capabilities of processing the physical downlink channel require different time of processing the physical downlink channel is resolved, and it is ensured that the processing complexity needed for performing the decoding operation on the reference signal does not exceed the processing capability of the UE.

**In a second aspect, the second capability information is determined.**

In a possible implementation, the network device receives second capability reporting information sent by the terminal device, and determines the second capability information of the reference signal based on the first indication information and the second capability reporting information.

Similarly, the terminal device may also determine the second capability information of the reference signal based on the second capability reporting information and the received first indication information sent by the network device.

In this possible implementation, the second capability information of the reference signal may be determined based on the first indication information and the second capability reporting information by using the following several possible designs.

In a first possible design, the second capability reporting information indicates whether the terminal device supports a quantity X of antennas and/or a quantity Y of antennas when the code length of the reference signal is 4.

For example, a reported value of the second capability reporting information further includes supported antenna information. An example in which X is 8, Y is 4, and the antenna information is a quantity of antennas is used for description. The reported value of the second capability reporting information includes one of the following: When the code length of the reference signal is 4, the supported quantity of antennas is 4 (Value1=4Rx); when the code length of the reference signal is 4, the supported quantity of antennas is 8 (Value2=8Rx); and when the code length of the reference signal is 4, the supported quantity of antennas is 4 and 8 (value3={4Rx,8Rx}). For another example, the reported value of the second capability reporting information includes whether the terminal device supports the quantity 8 of antennas (whether 8Rx is supported) when the code length of the reference signal is 4.

Optionally, the second capability reporting information further indicates whether the terminal device supports the quantity X of antennas, whether the terminal device supports the quantity Y of antennas, and whether the terminal device supports the code length 4 of the reference signal.

In a second possible design, the second capability reporting information indicates whether the terminal device separately supports the code length 4 of the reference signal when supporting a quantity X of antennas and a quantity Y of antennas.

During specific implementation, the second capability reporting information includes whether the terminal device supports the code length 4 of the reference signal. A reported value of the second capability reporting information further includes supported antenna information. For example, when the antenna information is a quantity of antennas, the reported value of the second capability reporting information includes one of the following: When the quantity of antennas is X, whether the terminal device supports the code length 4 of the reference signal (when the quantity of antennas is X, whether the code length 4 of the reference signal is supported); and when the quantity of antennas is Y, whether the terminal device supports the code length 4 of the reference signal (when the quantity of antennas is Y, whether the code length 4 of the reference signal is supported).

Optionally, the second capability reporting information further indicates whether the terminal device supports the quantity X of antennas and whether the terminal device supports the quantity Y of antennas.

In a third possible design, the second capability reporting information indicates whether the terminal device supports the code length 4 of the reference signal when supporting a quantity X of antennas.

For example, the second capability reporting information may be whether the terminal device supports the code length 4 of the reference signal when supporting 8Rx.

Optionally, the second capability reporting information further indicates whether the terminal device supports a quantity Y of antennas and whether the terminal device supports the code length 4 of the reference signal.

In another possible implementation, the network device may determine the second capability information of the reference signal based on the first indication information and second predefined information. Similarly, after receiving the first indication information sent by the network device, the terminal device determines the second capability information of the reference signal based on the first indication information and the second predefined information. The second predefined information is that when the code length of the reference signal is 4, a quantity of antennas supported by the terminal device is Y. In other words, the second capability information is determined based on the first indication information and the second predefined information. Optionally, the second capability reporting information indicates that the terminal device supports the quantity X of antennas.

In another possible implementation, the second predefined information is that if the code length of the reference signal is 4, a quantity of antennas configured by the terminal device by default is Y. Alternatively, the second predefined information is that if the code length of the reference signal is 4, a quantity of antennas that are not configured by the terminal device is X. Optionally, the second capability reporting information indicates that the terminal device supports the quantity X of antennas.

Based on the foregoing implementations, it can be ensured that when the code length of the reference signal is 4, an antenna quantity processing capability of the UE is not exceeded.

Optionally, the second predefined information may alternatively be that when the terminal device supports the quantity X of antennas and the code length 4 of the reference signal, the terminal device does not expect that a quantity of scheduled antennas is X.

In the foregoing two implementations, both X and Y are positive integers, and values of X and Y are any one of the following:

X is 8, and Y is 4;
or
X is 8, and Y is less than or equal to 4;
or
X is greater than 4, and Y is less than or equal to 4;
or
X is greater than 4, and Y is equal to 4;
or
X is 8, and Y is less than 8.

In this embodiment of this application, the capability information of the reference signal is determined based on the first indication information, and the capability information includes the first capability information and/or the second capability information. The first capability information includes the processing capability information of the physical downlink channel corresponding to the reference signal, and the second capability information includes the antenna information corresponding to the reference signal. In this embodiment of this application, from two perspectives of the processing capability information and the antenna information, it is ensured that the UE with the determined processing capability can process the reference signal.

In an embodiment, the network device receives fifth capability reporting information sent by the terminal device, and determines third capability information of the reference signal based on the first indication information and the fifth capability reporting information. The third capability information includes a DCI NCJT scenario corresponding to the reference signal.

Similarly, the terminal device may also determine the third capability information of the reference signal based on the fifth capability reporting information and the received first indication information sent by the network device.

In a possible implementation, the fifth capability reporting information indicates whether the terminal device supports single-DCI NCJT/dual-DCI NCJT when the code length of the reference signal is 4.

For example, a reported value of the fifth capability reporting information includes whether the terminal device supports the single-DCI NCJT/the dual-DCI NCJT (whether the single-DCI NCJT/dual-DCI NCJT is supported) when the code length of the reference signal is 4.

Optionally, the second capability reporting information further indicates whether the terminal device supports the single-DCI NCJT/the dual-DCI NCJT.

In a possible implementation, the fifth capability reporting information indicates whether the terminal device supports the code length 4 of the reference signal when supporting single-DCI NCJT/dual-DCI NCJT.

In an embodiment, the network device may determine the third capability information of the reference signal based on the first indication information and third predefined information. Similarly, after receiving the first indication information sent by the network device, the terminal device determines the third capability information of the reference signal based on the first indication information and the third predefined information. The third predefined information is that when the code length of the reference signal is 4, the terminal device does not support the single-DCI NCJT/the dual-DCI NCJT. In other words, the third capability information is determined based on the first indication information and the third predefined information.

Optionally, in some embodiments, the terminal device may send the fifth capability reporting information to the network device. Correspondingly, the network device receives the fifth capability reporting information sent by the terminal device, and determines, based on the fifth reporting information, the type of the reference signal sent to the terminal device.

The sixth capability reporting information is that the terminal device does not expect the code length of the reference signal to be 4 when the terminal device supports the first processing capability. Alternatively, the sixth capability reporting information is that when the first processing capability is supported, the code length of the reference signal is 2. Alternatively, the sixth capability reporting information is that the terminal device does not expect the code length of the reference signal to be 4 when the terminal device supports the quantity Y of antennas. Alternatively, the sixth capability reporting information is that when the supported quantity of antennas is Y, the code length of the reference signal is 2.

Optionally, in some embodiments, the network device may further send the reference signal to the terminal device. Correspondingly, the terminal device receives the reference signal sent by the network device, to receive the physical downlink channel.

In the foregoing embodiments, the first capability information is determined based on requirements of different capabilities of processing the physical downlink channel for processing delays and with reference to the first indication information and the first capability reporting information, to meet a processing time requirement in a tight order capability. When the code length of the reference signal is 4, a longer processing delay is reserved for the physical downlink channel, to ensure that processing complexity needed for a decoding operation on the physical downlink channel does not exceed the processing capability of the UE. In addition, the second capability information is determined with reference to the first indication information and the second capability reporting information, to ensure that the reference signal can be processed by using the quantity of antennas that corresponds to the reference signal and that is included in the second capability information, and further ensure that the processing complexity needed for performing the decoding operation on the physical downlink channel does not exceed the processing capability of the UE.

The following specifically describes how to determine the code length or the type of the reference signal based on the first indication information.

In some embodiments, the first indication information includes first information and second information. The first information is determined based on a first higher layer configuration parameter, and the second information is determined based on a second higher layer configuration parameter. Alternatively, the first information is determined based on a first higher layer configuration parameter, and the second information is determined based on DCI. Alternatively, the first information is determined based on a first higher layer configuration parameter, and the second information is determined based on a MAC CE.

The first information is used to determine physical resource mapping of the reference signal. Alternatively, the first information indicates that the physical resource mapping of the reference signal is determined based on a type 1 (namely, a configuration type 1) or a type 2 (namely, a configuration type 2). For example, the first higher layer configuration parameter is dmrs-type. If the first indication information includes the first higher layer configuration parameter, the physical resource mapping of the reference signal is determined based on the type 2. If the first indication information does not include the first higher layer configuration parameter, the physical resource mapping of the reference signal is determined based on the type 1. For another example, the first higher layer configuration parameter is dmrs-type. If a value of the first higher layer configuration parameter is the type 2, the physical resource mapping of the reference signal is determined based on the type 2. If the first higher layer configuration parameter is empty, the physical resource mapping of the reference signal is determined based on the type 1.

The second information is used to determine the code length of the reference signal, the second information is used to determine whether the type of the reference signal is the first type or the second type, or the second information is used to determine whether the type of the reference signal is an enhancement type.

In a possible implementation, the second information is used to determine the code length of the reference signal. For example, if the first indication information includes the second higher layer configuration parameter, the code length of the reference signal is 4. If the first indication information does not include the second higher layer configuration parameter, the code length of the reference signal is 2. For another example, the first indication information includes the second higher layer configuration parameter. If a value of the second higher layer configuration parameter is a first value, the code length of the reference signal is 4. If the value of the second higher layer configuration parameter is a second value, the code length of the reference signal is 2. For still another example, the first indication information includes a first field. If a bit state of the first field is a first value, the code length of the reference signal is 4. If the bit state of the first field is a second value, the code length of the reference signal is 2. The first value is 4, and the second value is 2.

Based on the foregoing implementation, the type of the reference signal can be effectively determined based on the first information and the second information, and signaling is reduced. For example, the first information indicates the physical resource mapping of the reference signal based on the type 1; and the second information indicates that the code length of the reference signal is 4. In this case the type of the reference signal is a reference signal enhancement type 1. For another example, the first information indicates the physical resource mapping of the reference signal based on the type 2; and the second information indicates that the code length of the reference signal is 4. In this case, the type of the reference signal is a reference signal enhancement type 2.

In another possible implementation, the second information is used to determine whether the type of the reference signal is the enhancement type. For example, if the first indication information includes the second higher layer configuration parameter, the type of the reference signal is the enhancement type. If the first indication information does not include the second higher layer configuration parameter, the type of the reference signal is not the enhancement type. For another example, if a value of the second higher layer configuration parameter is a first value, the type of the reference signal is the enhancement type. If the value of the second higher layer configuration parameter is a second value, the type of the reference signal is not the enhancement type. For still another example, the first indication information includes a second field. If a bit state of the second field is a first value, the type of the reference signal is the enhancement type. If the bit state of the first field is a second value, the type of the reference signal is not the enhancement type. The first value is enabled (for example, enabled), and the second value is disabled (for example, not enabled).

Based on the foregoing implementation, the type of the reference signal can be effectively determined based on the first information and the second information, and signaling is reduced. For example, the first information indicates the physical resource mapping of the reference signal based on the type 1; and the second information indicates that the type of the reference signal is the enhancement type. In this case, the type of the reference signal is a reference signal enhancement type 1. For another example, the first information indicates the physical resource mapping of the reference signal based on the type 2; and the second information indicates that the type of the reference signal is the enhancement type. In this case, the type of the reference signal is a reference signal enhancement type 2.

A higher layer configuration parameter is indicated by using RRC or a MAC CE. The first field and the second field are indicated by using DCI.

In some other embodiments, the first indication information is determined based on a third higher layer configuration parameter and/or a fourth higher layer configuration parameter. The third higher layer configuration parameter is used to determine physical resource mapping when the code length of the reference signal is 2. Alternatively, the third higher layer configuration parameter is used to determine the type of the reference signal when the code length of the reference signal is 2. Alternatively, the third higher layer configuration parameter is used to determine that the type of the reference signal is a non-enhancement type. For example, the first higher layer configuration parameter is dmrs-type. If the first indication information includes the first higher layer configuration parameter, the physical resource mapping of the reference signal is determined based on a type 2. If the first indication information does not include the first higher layer configuration parameter, the physical resource mapping of the reference signal is determined based on a type 1. For another example, the first higher layer configuration parameter is dmrs-type. If a value of the first higher layer configuration parameter is a type 2, the physical resource mapping of the reference signal is determined based on the type 2. If the first higher layer configuration parameter is empty, the physical resource mapping of the reference signal is determined based on a type 1.

The fourth higher layer configuration parameter is used to determine physical resource mapping when the code length of the reference signal is 4. Alternatively, the fourth higher layer configuration parameter is used to determine the type of the reference signal when the code length of the reference signal is 4. Alternatively, the fourth higher layer configuration parameter is used to determine a reference signal enhancement type. For example, the fourth higher layer configuration parameter is dmrs-type-r18. When the fourth higher layer configuration parameter is a third value, the type of the reference signal is a reference signal enhancement type 1. When the fourth higher layer configuration parameter is a fourth value, the type of the reference signal is a reference signal enhancement type 2. The third value is etype1, and the fourth value is etype2.

In a possible implementation, the first indication information cannot include both the third higher layer configuration parameter and the fourth higher layer configuration parameter. For example, when the first indication information includes the third higher layer configuration parameter, the type of the reference signal is the reference signal type 2. For another example, when the first indication information does not include the third higher layer configuration parameter and does not include the fourth higher layer configuration parameter, the type of the reference signal is the reference signal type 1. For another example, when the first indication information does not include the third higher layer configuration parameter and includes the fourth higher layer configuration parameter, the type of the reference signal is determined based on the fourth higher layer configuration parameter.

Based on the foregoing implementation, the type of the reference signal may be determined based on two higher layer parameters, which has good backward compatibility and effectively reduces higher layer signaling and dynamic signaling overheads.

In a possible implementation, the first indication information may include both the third higher layer configuration parameter and the fourth higher layer configuration parameter. When the first indication information includes both the third higher layer configuration parameter and the fourth higher layer configuration parameter, the type of the reference signal is determined based on the fourth higher layer configuration parameter. Alternatively, when the first indication information includes the fourth higher layer configuration parameter, the type of the reference signal is determined based on the fourth higher layer configuration parameter.

Further, a mapping relationship between the reference signal and a physical resource is described.

It is determined that the type of the reference signal is the reference signal enhancement type 1 or the reference signal enhancement type 2 based on the first indication information. A reference signal sequence r(m) is mapped to a parameter $\tilde{a}_{k,l}^{(\tilde{p}_j)}$ based on the following Formula (3):

$$\tilde{a}_{k,l}^{(\tilde{p}_j)} = \mathrm{w}_{\mathrm{f-r18}}(f)\mathrm{w}_{\mathrm{t}}(l')r(2n + k')$$

$$k = \begin{cases} 4n + 2k' + \Delta, & e\text{Type 1} \\ 6n + k' + \Delta, & e\text{Type 2} \end{cases}$$

$$k' = 0,1$$

$$l = \bar{l} + l' \qquad\qquad \text{Formula (3)}$$

$$n = 0,1, \dots$$

$$j = 0,1, \dots, v - 1$$

where

$$f = (2n + k')mod4.$$

$w_{f\text{-}r18}(f)$ and $w_t(l')$ represent code values. $w_{f\text{-}r18}(f)$ represents a value of an FD-OCC, and $w_t(l')$ represents a value of a TD-OCC. $\Delta$ represents a value corresponding to a CDM group, and $\tilde{p}_j$ represents a port number. If the type of the reference signal is the enhancement type 1, $w_{f\text{-}r18}(f)$, $w_t(l')$, and $\Delta$ are determined based on Table 8. If the type of the reference signal is the enhancement type 2, $w_{f\text{-}r18}(f)$, $w_t(l')$, and $\Delta$ are determined based on Table 9.

Optionally, the reference signal is an uplink reference signal, and transmission precoding is disabled.

For example, Table 8 shows parameters of an uplink reference signal enhancement type 1.

Table 8

| $p$ | CDM group $\lambda$ | $\Delta$ | $W_{f\text{-}r18}(f)$ | | | | $w_t(l')$ | |
| --- | --- | --- | --- | --- | --- | --- | --- | --- |
| | | | f = 0 | f = 1 | f = 2 | f = 3 | l' = 0 | l' = 1 |
| 0 | 0 | 0 | +1 | +1 | +1 | +1 | +1 | +1 |
| 1 | 0 | 0 | +1 | -1 | +1 | -1 | +1 | +1 |
| 2 | 1 | 1 | +1 | +1 | +1 | +1 | +1 | +1 |
| $p$ | CDM group $\lambda$ | $\Delta$ | $w_{f\text{-}r18}(f)$ | | | | $w_t(l')$ | |
| | | | f = 0 | f = 1 | f = 2 | f = 3 | l' = 0 | l' = 1 |
| 3 | 1 | 1 | +1 | -1 | +1 | -1 | +1 | +1 |
| 4 | 0 | 0 | +1 | +1 | +1 | +1 | +1 | -1 |
| 5 | 0 | 0 | +1 | -1 | +1 | -1 | +1 | -1 |
| 6 | 1 | 1 | +1 | +1 | +1 | +1 | +1 | -1 |
| 7 | 1 | 1 | +1 | -1 | +1 | -1 | +1 | -1 |
| 8 | 0 | 0 | +1 | +j | -1 | -j | +1 | +1 |
| 9 | 0 | 0 | +1 | -j | -1 | +j | +1 | +1 |
| 10 | 1 | 1 | +1 | +j | -1 | -j | +1 | +1 |
| 11 | 1 | 1 | +1 | -j | -1 | +j | +1 | +1 |
| 12 | 0 | 0 | +1 | +j | -1 | -j | +1 | -1 |
| 13 | 0 | 0 | +1 | -j | -1 | +j | +1 | -1 |
| 14 | 1 | 1 | +1 | +j | -1 | -j | +1 | -1 |
| 15 | 1 | 1 | +1 | -j | -1 | +j | +1 | -1 |

For example, Table 9 shows parameters of an uplink reference signal enhancement type 2.

Table 9

| $p$ | CDM group $\lambda$ | $\Delta$ | $w_{f\text{-}r18}(f)$ | | | | $w_t(l')$ | |
| --- | --- | --- | --- | --- | --- | --- | --- | --- |
| | | | f=0 | f=1 | f=2 | f=3 | l' = 0 | l' = 1 |
| 0 | 0 | 0 | +1 | +1 | +1 | +1 | +1 | +1 |
| 1 | 0 | 0 | +1 | -1 | +1 | -1 | +1 | +1 |
| 2 | 1 | 2 | +1 | +1 | +1 | +1 | +1 | +1 |
| 3 | 1 | 2 | +1 | -1 | +1 | -1 | +1 | +1 |
| 4 | 2 | 4 | +1 | +1 | +1 | 1 | +1 | +1 |
| 5 | 2 | 4 | +1 | -1 | +1 | -1 | +1 | +1 |
| 6 | 0 | 0 | +1 | +1 | +1 | +1 | +1 | -1 |

(continued)

| p | CDM group $\lambda$ | $\Delta$ | $w_{\text{f-r18}}(f)$ | | | | $w_t(l')$ | |
|---|---|---|---|---|---|---|---|---|
| | | | f=0 | f=1 | f=2 | f=3 | $l' = 0$ | $l' = 1$ |
| 7 | 0 | 0 | +1 | -1 | +1 | -1 | +1 | -1 |
| 8 | 1 | 2 | +1 | +1 | +1 | +1 | +1 | -1 |
| 9 | 1 | 2 | +1 | -1 | +1 | -1 | +1 | -1 |
| f = 0 | f = 1 | f = 2 | f = 3 | $l' = 0$ | $l' = 1$ | | | |
| 10 | 2 | 4 | +1 | +1 | +1 | +1 | +1 | -1 |
| 11 | 2 | 4 | +1 | -1 | +1 | -1 | +1 | -1 |
| 12 | 0 | 0 | +1 | +j | -1 | -j | +1 | +1 |
| 13 | 0 | 0 | +1 | -j | -1 | +j | +1 | +1 |
| 14 | 1 | 2 | +1 | +j | -1 | -j | +1 | +1 |
| 15 | 1 | 2 | +1 | -j | -1 | +j | +1 | +1 |
| 16 | 2 | 4 | +1 | +j | -1 | -j | +1 | +1 |
| 17 | 2 | 4 | +1 | -j | -1 | +j | +1 | +1 |
| 18 | 0 | 0 | +1 | +j | -1 | -j | +1 | -1 |
| 19 | 0 | 0 | +1 | -j | -1 | +j | +1 | -1 |
| 20 | 1 | 2 | +1 | +j | -1 | -j | +1 | -1 |
| 21 | 1 | 2 | +1 | -j | -1 | +j | +1 | -1 |
| 22 | 2 | 4 | +1 | +j | -1 | -j | +1 | -1 |
| 23 | 2 | 4 | +1 | -j | -1 | +j | +1 | -1 |

Further, it is determined that the type of the reference signal is the reference signal enhancement type 1 or the reference signal enhancement type 2 based on the first indication information. A reference signal sequence r(m) is mapped to a resource element $(k, l)_{p,\mu}$ based on the following Formula (4):

$$a_{k,l}^{(p)} = \beta_{\text{PDSCH}}^{\text{DMRS}} w_{\text{f-r18}}(f) w_t(l') r(2n + k')$$

$$k = \begin{cases} 4n + 2k' + \Delta, & e\text{Type 1} \\ 6n + k' + \Delta, & e\text{Type 2} \end{cases}$$

$$k' = 0,1$$

$$l = \bar{l} + l' \tag{4}$$

$$n = 0,1, \dots$$

where

$$f = (2n + k') \bmod 4.$$

$w_{\text{f-r18}}(f)$ and $w_t(l')$ represent code values. $w_{\text{f-r18}}(f)$ represents a value of an FD-OCC, and $w_t(l')$ represents a value of a TD-OCC. $\beta_{PDSCH}^{DMRS}$ represents a scaling factor, $\Delta$ represents a value corresponding to a CDM group, and $\tilde{p}_j$ represents a port number. If the type of the reference signal is the enhancement type 1, $w_{\text{f-r18}}(f)$, $w_t(l')$, and $\Delta$ are determined based on Table 10. If the type of the reference signal is the enhancement type 2, $w_{\text{f-r18}}(f)$, $w_t(l')$, and $\Delta$ are determined based on Table 11.

Optionally, the reference signal is a downlink reference signal, and transmission precoding is disabled.

For example, Table 10 shows parameters of a downlink reference signal enhancement type 1.

Table 10

| p | CDM group $\lambda$ | $\Delta$ | $w_{f\text{-}r18}(f)$ | | | | $w_t(l')$ | |
|---|---|---|---|---|---|---|---|---|
| | | | f = 0 | f = 1 | f = 2 | f = 3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +1 | -1 | -1 | +1 | +1 |
| 1009 | 0 | 0 | +1 | -1 | -1 | +1 | +1 | +1 |
| 1010 | 1 | 1 | +1 | +1 | -1 | -1 | +1 | +1 |
| 1011 | 1 | 1 | +1 | -1 | -1 | +1 | +1 | +1 |
| 1012 | 0 | 0 | +1 | +1 | -1 | -1 | +1 | -1 |
| 1013 | 0 | 0 | +1 | -1 | -1 | +1 | +1 | -1 |
| 1014 | 1 | 1 | +1 | +1 | -1 | -1 | +1 | -1 |
| 1015 | 1 | 1 | +1 | -1 | -1 | +1 | +1 | -1 |

For example, Table 11 shows parameters of a downlink reference signal enhancement type 2.

Table 11

| p | CDM group $\lambda$ | $\Delta$ | $w_{f\text{-}r18}(f)$ | | | | $w_t(l')$ | |
|---|---|---|---|---|---|---|---|---|
| | | | f = 0 | f = 1 | f = 2 | f = 3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | +1 | -1 | -1 | +1 | +1 |
| 1013 | 0 | 0 | +1 | -1 | -1 | +1 | +1 | +1 |
| 1014 | 1 | 2 | +1 | +1 | -1 | -1 | +1 | +1 |
| 1015 | 1 | 2 | +1 | -1 | -1 | +1 | +1 | +1 |
| 1016 | 2 | 4 | +1 | +1 | -1 | -1 | +1 | +1 |

(continued)

| $p$ | CDM group $\lambda$ | $\Delta$ | $w_{f\text{-}r18}(f)$ | | | | $w_t(l')$ | |
|---|---|---|---|---|---|---|---|---|
| | | | $f = 0$ | $f = 1$ | $f = 2$ | $f = 3$ | $l' = 0$ | $l' = 1$ |
| 1017 | 2 | 4 | +1 | -1 | -1 | +1 | +1 | +1 |
| 1018 | 0 | 0 | +1 | +1 | -1 | -1 | +1 | -1 |
| 1019 | 0 | 0 | +1 | -1 | -1 | +1 | +1 | -1 |
| 1020 | 1 | 2 | +1 | +1 | -1 | -1 | +1 | -1 |
| 1021 | 1 | 2 | +1 | -1 | -1 | +1 | +1 | -1 |
| 1022 | 2 | 4 | +1 | +1 | -1 | -1 | +1 | -1 |
| 1023 | 2 | 4 | +1 | -1 | -1 | +1 | +1 | -1 |

It should be noted that the methods provided in embodiments of this application may be implemented separately, or may be implemented in combination. This is not limited.

It may be understood that an execution body may perform some or all of the steps in embodiments of this application. The steps or operations are merely examples. Embodiments of this application may further include performing other operations or variations of various operations. In addition, the steps may be performed in a sequence different from that presented in embodiments of this application, and not all operations in embodiments of this application may be performed.

The foregoing mainly describes the solutions provided in embodiments of this application from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into function modules based on the foregoing method examples. For example, each function module may be obtained through division based on each corresponding function, or two or more than two functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

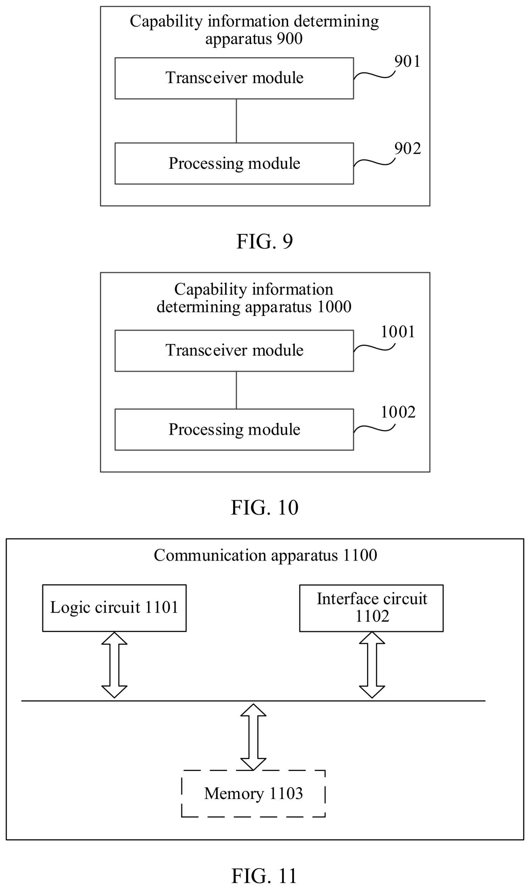

When function modules are divided based on corresponding functions, FIG. 9 shows a capability information determining apparatus 900. FIG. 9 is a diagram of a structure of Embodiment 1 of a capability information determining apparatus according to an embodiment of this application. The capability information determining apparatus 900 includes:

a transceiver module 901, configured to send first indication information, where the first indication information indicates at least one of a code length, a type, a port number, and a time resource of a reference signal; and
a processing module 902, configured to determine capability information of the reference signal based on the first indication information.

In a possible design, the capability information includes first capability information and/or second capability information, the first capability information includes processing capability information of a physical downlink channel corresponding to the reference signal, and the second capability information includes antenna information corresponding to the reference signal.

In a possible design, the transceiver module 901 is further configured to send second indication information, where the second indication information indicates a first physical resource and a second physical resource of the reference signal; and

the processing module 902 is further configured to determine, based on the second indication information, that a time interval between the first physical resource and the second physical resource is T, where
T is greater than or equal to a first time length, and the first time length is determined based on the first capability information of the reference signal.

In a possible design, the processing module 902 is specifically configured to:

determine the first capability information of the reference signal based on the first indication information and first capability reporting information, where
the first capability reporting information indicates whether a first processing capability is supported when the code length of the reference signal is 4;
or
the first capability reporting information indicates whether a terminal device separately supports the code length 4 of the reference signal when supporting a first processing capability and a second processing capability;
or
the first capability reporting information indicates whether a terminal device supports the code length 4 of the reference signal when supporting a first processing capability.

In a possible design, the processing module 902 is specifically configured to:

determine the second capability information of the reference signal based on the first indication information and second capability reporting information, where
the second capability reporting information indicates whether the terminal device supports a quantity X of antennas and/or a quantity Y of antennas when the code length of the reference signal is 4;
or
the second capability reporting information indicates whether the terminal device separately supports the code length 4 of the reference signal when supporting a quantity X of antennas and a quantity Y of antennas;
or
the second capability reporting information indicates whether the terminal device supports the code length 4 of the reference signal when supporting a quantity X of antennas, where
both X and Y are positive integers.

In a possible design, values of X and Y are any one of the following:

X is 8, and Y is 4;
or
X is 8, and Y is less than or equal to 4;
or
X is greater than 4, and Y is less than or equal to 4;
or
X is greater than 4, and Y is equal to 4;
or
X is 8, and Y is less than 8.

In a possible design, the first capability information is determined based on the first indication information and first predefined information, and the first predefined information is that when the code length of the reference signal is 4, a capability of processing the physical downlink channel corresponding to the reference signal is a second processing capability.

In a possible design, the second capability information is determined based on the first indication information and second predefined information, the second predefined information is that when the code length of the reference signal is 4, a quantity of antennas supported by a terminal device is Y, and Y is a positive integer.

In a possible design, the code length of the reference signal and the first time length meet:

when the code length of the reference signal is 4, the first time length is T1; or
when the code length of the reference signal is 2, the first time length is T2, where
both T1 and T2 are positive integers, and T1 is greater than T2.

In a possible design, when the code length of the reference signal is 4, the first time length T1 meets:

$$\text{Formula (1): } T_{proc,1} = (N_1 + d_{1,1} + d_2 + d_3)(2048 + 144) \cdot \kappa 2^{-\mu} \cdot T_c + T_{ext};$$

or

$$\text{Formula (2):} \quad T_{proc,1} = \left(N_1 + d_{1,1} + d_2\right)\left(2048 + 144\right) \cdot \kappa 2^{-\mu} \cdot T_c + T_{ext},$$

where

$T_{proc,1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{ext}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

In a possible design, T1 is a sum of T2 and a preset symbol length.

In a possible design, $N_1$ is time determined based on a mapping relationship between $N_1$ and $\mu$, and the mapping relationship between $N_1$ and $\mu$ is determined based on the first capability information;

or

$N_1$ is time obtained by adding preset second time to time determined based on a mapping relationship between $N_1$ and $\mu$, and the mapping relationship between $N_1$ and $\mu$ is determined based on the first capability information.

In a possible design, the transceiver module 901 is specifically configured to:

receive third capability reporting information, where the third capability reporting information indicates the first time or the second time.

In a possible design, the transceiver module 901 is specifically configured to:

receive the first capability reporting information.

In a possible design, the transceiver module 901 is specifically configured to:

receive the second capability reporting information.

The capability information determining apparatus provided in this embodiment of this application may be configured to perform the capability information determining method on a network device side in any one of the foregoing embodiments. Implementation principles and technical effects of the apparatus are similar to those of the method. Details are not described herein again.

When function modules are divided based on corresponding functions, FIG. 10 shows a capability information determining apparatus. FIG. 10 is a diagram of a structure of Embodiment 2 of a capability information determining apparatus according to an embodiment of this application. The capability information determining apparatus 1000 includes:

> a transceiver module 1001, configured to receive first indication information, where the first indication information indicates at least one of a code length, a type, a port number, and a time resource of a reference signal; and
> a processing module 1002, configured to determine capability information of the reference signal based on the first indication information.

In a possible design, the capability information includes first capability information and/or second capability information, the first capability information includes processing capability information of a physical downlink channel corresponding to the reference signal, and the second capability information includes antenna information corresponding to the reference signal.

In a possible design, the transceiver module 1001 is further configured to receive second indication information, where the second indication information indicates a first physical resource and a second physical resource of the reference signal; and

> the processing module 1002 is further configured to determine, based on the second indication information, that a time interval between the first physical resource and the second physical resource is T, where
> T is greater than or equal to a first time length, and the first time length is determined based on the first capability information of the reference signal.

In a possible design, the processing module 1002 is specifically configured to:

> determine the first capability information of the reference signal based on the first indication information and first capability reporting information, where
> the first capability reporting information indicates whether a first processing capability is supported when the code length of the reference signal is 4;
> or
> the first capability reporting information indicates whether a terminal device separately supports the code length 4 of the reference signal when supporting a first processing capability and a second processing capability;
or
the first capability reporting information indicates whether a terminal device supports the code length 4 of the reference signal when supporting a first processing capability.

In a possible design, the processing module 1002 is specifically configured to:

determine the second capability information of the reference signal based on the first indication information and second capability reporting information, where
the second capability reporting information indicates whether the terminal device supports a quantity X of antennas and/or a quantity Y of antennas when the code length of the reference signal is 4;
or
the second capability reporting information indicates whether the terminal device separately supports the code length 4 of the reference signal when supporting a quantity X of antennas and a quantity Y of antennas;
or
the second capability reporting information indicates whether the terminal device supports the code length 4 of the reference signal when supporting a quantity X of antennas, where
both X and Y are positive integers.

In a possible design, values of X and Y are any one of the following:

X is 8, and Y is 4;
or
X is 8, and Y is less than or equal to 4;
or
X is greater than 4, and Y is less than or equal to 4;
or
X is greater than 4, and Y is equal to 4;
or
X is 8, and Y is less than 8.

In a possible design, the first capability information is determined based on the first indication information and first predefined information, and the first predefined information is that when the code length of the reference signal is 4, a capability of processing the physical downlink channel corresponding to the reference signal is a second processing capability.

In a possible design, the second capability information is determined based on the first indication information and second predefined information, and the second predefined information is that when the code length of the reference signal is 4, a quantity of antennas supported by a terminal device is Y.

In a possible design, the code length of the reference signal and the first time length meet:

when the code length of the reference signal is 4, the first time length is T1; or
when the code length of the reference signal is 2, the first time length is T2, where
both T1 and T2 are positive integers, and T1 is greater than T2.

In a possible design, when the code length of the reference signal is 4, the first time length T1 meets:

$$\text{Formula (1): } T_{\text{proc},1} = (N_1 + d_{1,1} + d_2 + d_3)(2048 + 144) \cdot \kappa 2^{-\mu} \cdot T_c + T_{\text{ext}};$$

or

$$\text{Formula (2): } T_{\text{proc},1} = (N_1 + d_{1,1} + d_2)(2048 + 144) \cdot \kappa 2^{-\mu} \cdot T_c + T_{\text{ext}},$$

where
$T_{\text{proc},1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{\text{ext}}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

In a possible design, T1 is a sum of T2 and a preset symbol length.

In a possible design, $N_1$ is time determined based on a mapping relationship between $N_1$ and $\mu$, and the mapping relationship between $N_1$ and $\mu$ is determined based on the first capability information;

or

$N_1$ is time obtained by adding preset second time to time determined based on a mapping relationship between $N_1$ and $\mu$, and the mapping relationship between $N_1$ and $\mu$ is determined based on the first capability information.

In a possible design, the transceiver module 1001 is further configured to:

receive third capability reporting information, where the third capability reporting information indicates the first time or the second time.

In a possible design, the transceiver module 1001 is further configured to:

receive the first capability reporting information.

In a possible design, the transceiver module 1001 is further configured to:

receive the second capability reporting information.

The capability information determining apparatus provided in this embodiment of this application may be configured to perform the capability information determining method on a terminal device side in any one of the foregoing embodiments. Implementation principles and technical effects of the apparatus are similar to those of the method. Details are not described herein again.

For example, the capability information determining apparatus 900 may be a communication device, or may be a chip used in the communication device, or another combined device or component that has a function of the communication apparatus. When the capability information determining apparatus 900 is the communication device, the transceiver module 901 may be a transceiver, where the transceiver may include an antenna, a radio frequency circuit, and the like; and the processing module 902 may be a processor (or a processing circuit), for example, a baseband processor, where the baseband processor may include one or more CPUs. When the capability information determining apparatus 900 is the component that has the function of the communication apparatus, the transceiver module 901 may be a radio frequency unit, and the processing module 902 may be a processor (or a processing circuit), for example, a baseband processor. When the capability information determining apparatus 900 is a chip system, the transceiver module 901 may be an input/output interface of a chip (for example, a baseband chip), and the processing module 902 may be a processor (or a processing circuit) of the chip system, and may include one or more central processing units. It should be understood that the transceiver module 901 in this embodiment of this application may be implemented by the transceiver or a transceiver-related circuit component; and the processing module 902 may be implemented by the processor or a processor-related circuit component (or referred to as the processing circuit).

For example, the transceiver module 901 may be configured to perform all receiving and sending operations performed by the network device in the embodiment shown in FIG. 8, and/or configured to support another process of the technology described in this specification. The processing module 902 may be configured to perform all operations other than receiving and sending operations performed by the network device in the embodiment shown in FIG. 8, and/or configured to support another process of the technology described in this specification.

In another possible implementation, the transceiver module 901 in FIG. 9 may be replaced with a transceiver, and a function of the transceiver module 901 may be integrated into the transceiver. The processing module 902 may be replaced with a processor, and a function of the processing module 902 may be integrated into the processor. Further, the capability information determining apparatus 900 shown in FIG. 9 may further include a memory.

Alternatively, when the processing module 902 is replaced with a processor, and the transceiver module 901 is replaced with a transceiver, the capability information determining apparatus 900 in this embodiment of this application may be a communication apparatus 1100 shown in FIG. 11. The processor may be a logic circuit 1101, and the transceiver may be an interface circuit 1102. Further, the communication apparatus 1100 shown in FIG. 11 may further include a memory 1103.

Similarly, the capability information determining apparatus 1000 in this embodiment of this application may alternatively be the communication apparatus 1100 shown in FIG. 11. Details are not described herein again.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The foregoing computer-readable storage medium may also be an external storage device of the foregoing terminal, for example, a plug-in hard disk, a smart memory card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. "First" and "second" are merely intended for a purpose of descriptions, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more. "A plurality of" refers to two or more than two. "At least two (items) "means two, three, or more than three. "And/or" is used to describe an association relationship between associated objects, and indicates that three relationships may exist. For example, "A and/or B" may indicate three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c, or at least one of a, b, and c may indicate: a, b, c, "a and b", "a and c", "b and c", or "a, b, and c", where a, b, and c may be singular, or may be plural. Both "when" and "if" mean that corresponding processing is performed in an objective case, but are not intended to limit time. In addition, the terms do not necessarily mean that a determining action is performed during implementation, and do not mean another limitation either.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions about implementations allow a person skilled in the art to understand that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such understanding, the technical solutions of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

**Claims**

1.  A capability information determining method, wherein the method comprises:

    sending first indication information, wherein the first indication information indicates at least one of a code length, a type, a port number, and a time resource of a reference signal; and
    determining capability information of the reference signal based on the first indication information.

2.  The method according to claim 1, wherein the capability information comprises first capability information and/or second capability information, the first capability information comprises processing capability information of a physical downlink channel corresponding to the reference signal, and the second capability information comprises antenna information corresponding to the reference signal.

3.  The method according to claim 2, wherein the method further comprises:

    sending second indication information, wherein the second indication information indicates a first physical resource and a second physical resource of the reference signal; and
    determining, based on the second indication information, that a time interval between the first physical resource and the second physical resource is T, wherein
    T is greater than or equal to a first time length, and the first time length is determined based on the first capability information of the reference signal.

4.  The method according to claim 2 or 3, wherein determining the capability information of the reference signal based on the first indication information comprises:

    determining the first capability information of the reference signal based on the first indication information and first capability reporting information, wherein
    the first capability reporting information indicates whether a first processing capability is supported when the code length of the reference signal is 4;
    or
    the first capability reporting information indicates whether a terminal device separately supports the code length 4 of the reference signal when supporting a first processing capability and a second processing capability;
    or
    the first capability reporting information indicates whether a terminal device supports the code length 4 of the reference signal when supporting a first processing capability.

5.  The method according to any one of claims 2 to 4, wherein determining the capability information of the reference signal based on the first indication information comprises:

    determining the second capability information of the reference signal based on the first indication information and second capability reporting information, wherein
    the second capability reporting information indicates whether the terminal device supports a quantity X of antennas and/or a quantity Y of antennas when the code length of the reference signal is 4;
    or
    the second capability reporting information indicates whether the terminal device separately supports the code length 4 of the reference signal when supporting a quantity X of antennas and a quantity Y of antennas;
    or
    the second capability reporting information indicates whether the terminal device supports the code length 4 of the reference signal when supporting a quantity X of antennas, wherein
    both X and Y are positive integers.

6.  The method according to claim 5, wherein values of X and Y are any one of the following:

X is 8, and Y is 4;
or
X is 8, and Y is less than or equal to 4;
or
X is greater than 4, and Y is less than or equal to 4;
or
X is greater than 4, and Y is equal to 4;
or
X is 8, and Y is less than 8.

7. The method according to claim 2 or 3, wherein the first capability information is determined based on the first indication information and first predefined information, and the first predefined information is that when the code length of the reference signal is 4, a capability of processing the physical downlink channel corresponding to the reference signal is a second processing capability.

8. The method according to claim 2, 3, or 7, wherein the second capability information is determined based on the first indication information and second predefined information, the second predefined information is that when the code length of the reference signal is 4, a quantity of antennas supported by a terminal device is Y, and Y is a positive integer.

9. The method according to claim 3, wherein the code length of the reference signal and the first time length meet:

   when the code length of the reference signal is 4, the first time length is T1; or
   when the code length of the reference signal is 2, the first time length is T2, wherein
   both T1 and T2 are positive integers, and T1 is greater than T2.

10. The method according to claim 9, wherein when the code length of the reference signal is 4, the first time length T1 meets:

$$\text{Formula (1): } T_{\text{proc},1} = (N_1 + d_{1,1} + d_2 + d_3)(2048 + 144) \cdot \kappa 2^{-\mu} \cdot T_c + T_{\text{ext}};$$

or

$$\text{Formula (2): } T_{\text{proc},1} = \left(N_1 + d_{1,1} + d_2\right)(2048 + 144) \cdot \kappa 2^{-\mu} \cdot T_c + T_{\text{ext}},$$

wherein
$T_{\text{proc},1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{\text{ext}}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

11. The method according to claim 9 or 10, wherein T1 is a sum of T2 and a preset symbol length.

12. The method according to claim 10, wherein $N_1$ is time determined based on a mapping relationship between $N_1$ and $\mu$, and the mapping relationship between $N_1$ and $\mu$ is determined based on the first capability information;
    or
    $N_1$ is time obtained by adding preset second time to time determined based on a mapping relationship between $N_1$ and $\mu$, and the mapping relationship between $N_1$ and $\mu$ is determined based on the first capability information.

13. The method according to claim 12, wherein the method further comprises:
    receiving third capability reporting information, wherein the third capability reporting information indicates the first time or the second time.

14. The method according to claim 4, wherein the method further comprises:
    receiving the first capability reporting information.

**15.** The method according to claim 5 or 6, wherein the method further comprises:
receiving the second capability reporting information.

**16.** A capability information determining method, wherein the method comprises:

receiving first indication information, wherein the first indication information indicates at least one of a code length, a type, a port number, and a time resource of a reference signal; and
determining capability information of the reference signal based on the first indication information.

**17.** The method according to claim 16, wherein the capability information comprises first capability information and/or second capability information, the first capability information comprises processing capability information of a physical downlink channel corresponding to the reference signal, and the second capability information comprises antenna information corresponding to the reference signal.

**18.** The method according to claim 17, wherein the method further comprises:

receiving second indication information, wherein the second indication information indicates a first physical resource and a second physical resource of the reference signal; and
determining, based on the second indication information, that a time interval between the first physical resource and the second physical resource is T, wherein
T is greater than or equal to a first time length, and the first time length is determined based on the first capability information of the reference signal.

**19.** The method according to claim 17 or 18, wherein determining the capability information of the reference signal based on the first indication information comprises:

determining the first capability information of the reference signal based on the first indication information and first capability reporting information, wherein
the first capability reporting information indicates whether a first processing capability is supported when the code length of the reference signal is 4;
or
the first capability reporting information indicates whether a terminal device separately supports the code length 4 of the reference signal when supporting a first processing capability and a second processing capability;
or
the first capability reporting information indicates whether a terminal device supports the code length 4 of the reference signal when supporting a first processing capability.

**20.** The method according to any one of claims 17 to 19, wherein determining the capability information of the reference signal based on the first indication information comprises:

determining the second capability information of the reference signal based on the first indication information and second capability reporting information, wherein
the second capability reporting information indicates whether the terminal device supports a quantity X of antennas and/or a quantity Y of antennas when the code length of the reference signal is 4;
or
the second capability reporting information indicates whether the terminal device separately supports the code length 4 of the reference signal when supporting a quantity X of antennas and a quantity Y of antennas;
or
the second capability reporting information indicates whether the terminal device supports the code length 4 of the reference signal when supporting a quantity X of antennas, wherein
both X and Y are positive integers.

**21.** The method according to claim 20, wherein values of X and Y are any one of the following:

X is 8, and Y is 4;
or
X is 8, and Y is less than or equal to 4;
or

X is greater than 4, and Y is less than or equal to 4;
or
X is greater than 4, and Y is equal to 4;
or
X is 8, and Y is less than 8.

22. The method according to claim 17 or 18, wherein the first capability information is determined based on the first indication information and first predefined information, and the first predefined information is that when the code length of the reference signal is 4, a capability of processing the physical downlink channel corresponding to the reference signal is a second processing capability.

23. The method according to claim 17, 18, or 22, wherein the second capability information is determined based on the first indication information and second predefined information, and the second predefined information is that when the code length of the reference signal is 4, a quantity of antennas supported by a terminal device is Y.

24. The method according to claim 18, wherein the code length of the reference signal and the first time length meet:

when the code length of the reference signal is 4, the first time length is T1; or
when the code length of the reference signal is 2, the first time length is T2, wherein
both T1 and T2 are positive integers, and T1 is greater than T2.

25. The method according to claim 24, wherein when the code length of the reference signal is 4, the first time length T1 meets:

$$\text{Formula (1):} \ T_{proc,1} = (N_1 + d_{1,1} + d_2 + d_3)(2048 + 144) \cdot \kappa 2^{-\mu} \cdot T_c + T_{ext};$$

or

$$\text{Formula (2):} \ T_{proc,1} = (N_1 + d_{1,1} + d_2)(2048 + 144) \cdot \kappa 2^{-\mu} \cdot T_c + T_{ext},$$

wherein
$T_{proc,1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{ext}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

26. The method according to claim 22 or 23, wherein T1 is a sum of T2 and a preset symbol length.

27. The method according to claim 25, wherein $N_1$ is time determined based on a mapping relationship between $N_1$ and $\mu$, and the mapping relationship between $N_1$ and $\mu$ is determined based on the first capability information;
or
$N_1$ is time obtained by adding preset second time to time determined based on a mapping relationship between $N_1$ and $\mu$, and the mapping relationship between $N_1$ and $\mu$ is determined based on the first capability information.

28. The method according to claim 27, wherein the method further comprises:
receiving third capability reporting information, wherein the third capability reporting information indicates the first time or the second time.

29. The method according to claim 19, wherein the method further comprises:
receiving the first capability reporting information.

30. The method according to claim 20 or 21, wherein the method further comprises:
receiving the second capability reporting information.

31. A capability information determining apparatus, wherein the apparatus comprises:

a transceiver module, configured to send first indication information, wherein the first indication information indicates at least one of a code length, a type, a port number, and a time resource of a reference signal; and a processing module, configured to determine capability information of the reference signal based on the first indication information.

32. The apparatus according to claim 31, wherein the capability information comprises first capability information and/or second capability information, the first capability information comprises processing capability information of a physical downlink channel corresponding to the reference signal, and the second capability information comprises antenna information corresponding to the reference signal.

33. The apparatus according to claim 32, wherein the transceiver module is further configured to send second indication information, wherein the second indication information indicates a first physical resource and a second physical resource of the reference signal; and

the processing module is further configured to determine, based on the second indication information, that a time interval between the first physical resource and the second physical resource is T, wherein T is greater than or equal to a first time length, and the first time length is determined based on the first capability information of the reference signal.

34. The apparatus according to claim 32 or 33, wherein the processing module is specifically configured to:

determine the first capability information of the reference signal based on the first indication information and first capability reporting information, wherein
the first capability reporting information indicates whether a first processing capability is supported when the code length of the reference signal is 4;
or
the first capability reporting information indicates whether a terminal device separately supports the code length 4 of the reference signal when supporting a first processing capability and a second processing capability;
or
the first capability reporting information indicates whether a terminal device supports the code length 4 of the reference signal when supporting a first processing capability.

35. The apparatus according to any one of claims 32 to 34, wherein the processing module is specifically configured to:

determine the second capability information of the reference signal based on the first indication information and second capability reporting information, wherein
the second capability reporting information indicates whether the terminal device supports a quantity $X$ of antennas and/or a quantity $Y$ of antennas when the code length of the reference signal is 4;
or
the second capability reporting information indicates whether the terminal device separately supports the code length 4 of the reference signal when supporting a quantity $X$ of antennas and a quantity $Y$ of antennas;
or
the second capability reporting information indicates whether the terminal device supports the code length 4 of the reference signal when supporting a quantity $X$ of antennas, wherein
both $X$ and $Y$ are positive integers.

36. The apparatus according to claim 35, wherein values of $X$ and $Y$ are any one of the following:

$X$ is 8, and $Y$ is 4;
or
$X$ is 8, and $Y$ is less than or equal to 4;
or
$X$ is greater than 4, and $Y$ is less than or equal to 4;
or
$X$ is greater than 4, and $Y$ is equal to 4;
or

X is 8, and Y is less than 8.

37. The apparatus according to claim 32 or 33, wherein the first capability information is determined based on the first indication information and first predefined information, and the first predefined information is that when the code length of the reference signal is 4, a capability of processing the physical downlink channel corresponding to the reference signal is a second processing capability.

38. The apparatus according to claim 32, 33, or 37, wherein the second capability information is determined based on the first indication information and second predefined information, the second predefined information is that when the code length of the reference signal is 4, a quantity of antennas supported by a terminal device is Y, and Y is a positive integer.

39. The apparatus according to claim 33, wherein the code length of the reference signal and the first time length meet:

when the code length of the reference signal is 4, the first time length is T1; or
when the code length of the reference signal is 2, the first time length is T2, wherein
both T1 and T2 are positive integers, and T1 is greater than T2.

40. The apparatus according to claim 39, wherein when the code length of the reference signal is 4, the first time length T1 meets:

$$\text{Formula (1): } T_{proc,1} = (N_1 + d_{1,1} + d_2 + d_3)(2048 + 144) \cdot \kappa 2^{-\mu} \cdot T_c + T_{ext};$$

or

$$\text{Formula (2): } T_{proc,1} = (N_1 + d_{1,1} + d_2)(2048 + 144) \cdot \kappa 2^{-\mu} \cdot T_c + T_{ext},$$

wherein
$T_{proc,1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{ext}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

41. The apparatus according to claim 39 or 40, wherein T1 is a sum of T2 and a preset symbol length.

42. The apparatus according to claim 40, wherein $N_1$ is time determined based on a mapping relationship between $N_1$ and $\mu$, and the mapping relationship between $N_1$ and $\mu$ is determined based on the first capability information;
or
$N_1$ is time obtained by adding preset second time to time determined based on a mapping relationship between $N_1$ and $\mu$, and the mapping relationship between $N_1$ and $\mu$ is determined based on the first capability information.

43. The apparatus according to claim 42, wherein the transceiver module is specifically configured to:
receive third capability reporting information, wherein the third capability reporting information indicates the first time or the second time.

44. The apparatus according to claim 34, wherein the transceiver module is specifically configured to:
receive the first capability reporting information.

45. The apparatus according to claim 35 or 36, wherein the transceiver module is specifically configured to:
receive the second capability reporting information.

46. A capability information determining apparatus, wherein the apparatus comprises:

a transceiver module, configured to receive first indication information, wherein the first indication information indicates at least one of a code length, a type, a port number, and a time resource of a reference signal; and a processing module, configured to determine capability information of the reference signal based on the first indication information.

47. The apparatus according to claim 46, wherein the capability information comprises first capability information and/or second capability information, the first capability information comprises processing capability information of a physical downlink channel corresponding to the reference signal, and the second capability information comprises antenna information corresponding to the reference signal.

48. The apparatus according to claim 47, wherein the transceiver module is further configured to receive second indication information, wherein the second indication information indicates a first physical resource and a second physical resource of the reference signal; and

the processing module is further configured to determine, based on the second indication information, that a time interval between the first physical resource and the second physical resource is T, wherein T is greater than or equal to a first time length, and the first time length is determined based on the first capability information of the reference signal.

49. The apparatus according to claim 47 or 48, wherein the processing module is specifically configured to:

determine the first capability information of the reference signal based on the first indication information and first capability reporting information, wherein
the first capability reporting information indicates whether a first processing capability is supported when the code length of the reference signal is 4;
or
the first capability reporting information indicates whether a terminal device separately supports the code length 4 of the reference signal when supporting a first processing capability and a second processing capability;
or
the first capability reporting information indicates whether a terminal device supports the code length 4 of the reference signal when supporting a first processing capability.

50. The apparatus according to any one of claims 47 to 49, wherein the processing module is specifically configured to:

determine the second capability information of the reference signal based on the first indication information and second capability reporting information, wherein
the second capability reporting information indicates whether the terminal device supports a quantity X of antennas and/or a quantity Y of antennas when the code length of the reference signal is 4;
or
the second capability reporting information indicates whether the terminal device separately supports the code length 4 of the reference signal when supporting a quantity X of antennas and a quantity Y of antennas;
or
the second capability reporting information indicates whether the terminal device supports the code length 4 of the reference signal when supporting a quantity X of antennas, wherein
both X and Y are positive integers.

51. The apparatus according to claim 50, wherein values of X and Y are any one of the following:

X is 8, and Y is 4;
or
X is 8, and Y is less than or equal to 4;
or
X is greater than 4, and Y is less than or equal to 4;
or
X is greater than 4, and Y is equal to 4;
or
X is 8, and Y is less than 8.

52. The apparatus according to claim 47 or 48, wherein the first capability information is determined based on the first indication information and first predefined information, and the first predefined information is that when the code length of the reference signal is 4, a capability of processing the physical downlink channel corresponding to the reference signal is a second processing capability.

53. The apparatus according to claim 47, 48, or 52, wherein the second capability information is determined based on the first indication information and second predefined information, and the second predefined information is that when the code length of the reference signal is 4, a quantity of antennas supported by a terminal device is Y.

54. The apparatus according to claim 48, wherein the code length of the reference signal and the first time length meet:

when the code length of the reference signal is 4, the first time length is T1; or
when the code length of the reference signal is 2, the first time length is T2, wherein
both T1 and T2 are positive integers, and T1 is greater than T2.

55. The apparatus according to claim 54, wherein when the code length of the reference signal is 4, the first time length T1 meets:

$$\text{Formula (1): } T_{proc,1} = (N_1 + d_{1,1} + d_2 + d_3)(2048 + 144) \cdot \kappa 2^{-\mu} \cdot T_c + T_{ext};$$

or

$$\text{Formula (2): } T_{proc,1} = \left(N_1 + d_{1,1} + d_2\right)(2048 + 144) \cdot \kappa 2^{-\mu} \cdot T_c + T_{ext},$$

wherein
$T_{proc,1}$ represents the first time length, $N_1$ is a value related to $\mu$ corresponding to the first capability information, $d_{1,1}$ represents a value related to time domain resource allocation of the physical downlink channel, $d_2$ is a time length reported by a terminal device or is 0, $\kappa$ is a constant, $T_c$ represents a basic time unit, $d_3$ is preset first time, $\mu$ is a value related to a subcarrier spacing, $T_{ext}$ is an extended time length, and the subcarrier spacing is a smallest value among a subcarrier spacing of the reference signal, a subcarrier spacing of a physical downlink control channel PDCCH corresponding to the reference signal, and an uplink subcarrier spacing corresponding to the reference signal.

56. The apparatus according to claim 52 or 53, wherein T1 is a sum of T2 and a preset symbol length.

57. The apparatus according to claim 55, wherein $N_1$ is time determined based on a mapping relationship between $N_1$ and $\mu$, and the mapping relationship between $N_1$ and $\mu$ is determined based on the first capability information;
or
$N_1$ is time obtained by adding preset second time to time determined based on a mapping relationship between $N_1$ and $\mu$, and the mapping relationship between $N_1$ and $\mu$ is determined based on the first capability information.

58. The apparatus according to claim 57, wherein the transceiver module is further configured to:
receive third capability reporting information, wherein the third capability reporting information indicates the first time or the second time.

59. The apparatus according to claim 49, wherein the transceiver module is further configured to:
receive the first capability reporting information.

60. The apparatus according to claim 50 or 51, wherein the transceiver module is further configured to:
receive the second capability reporting information.

61. A communication apparatus, wherein the communication apparatus comprises a processor, and the processor is configured to run a computer program or instructions, to enable the communication apparatus to perform the capability information determining method according to any one of claims 1 to 15, or perform the capability information determining method according to any one of claims 16 to 30.

62. A computer-readable storage medium, wherein the computer-readable storage medium stores computer instructions or a program, and when the computer instructions or the program is run on a computer, the capability information determining method according to any one of claims 1 to 15 is performed, or the capability information determining method according to any one of claims 16 to 30 is performed.

63. A computer program product, wherein the computer program product comprises computer instructions, and when a part or all of the computer instructions are run on a computer, the capability information determining method according to any one of claims 1 to 15 is performed, or the capability information determining method according to any one of claims 16 to 30 is performed.

FIG. 1

FIG. 2

FIG. 3

FIG. 4

(Type 2 CDM diagram)

FIG. 5

FIG. 6

FIG. 7

FIG. 8

Capability information determining apparatus 900

Transceiver module — 901

Processing module — 902

FIG. 9

Capability information determining apparatus 1000

Transceiver module — 1001

Processing module — 1002

FIG. 10

Communication apparatus 1100

Logic circuit 1101

Interface circuit 1102

Memory 1103

FIG. 11

## INTERNATIONAL SEARCH REPORT

| | International application No. |
|---|---|
| | **PCT/CN2024/076255** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXT, DWPI, 3GPP: 指示, 能力, 参考信号, 码长, 端口, 资源, 物理, 时间, 天线, 上报, indicat+, capability, DMRS, DM-RS, HARQ, PDSCH, PDCCH, code, length, port, time, antenna, report+, physical

### C. DOCUMENTS CONSIDERED TO BE RELEVANT

| Category* | Citation of document, with indication, where appropriate, of the relevant passages | Relevant to claim No. |
|---|---|---|
| X | CN 114928386 A (HUAWEI TECHNOLOGIES CO., LTD.) 19 August 2022 (2022-08-19) description, paragraphs [105]-[431] | 1-63 |
| X | WO 2018170842 A1 (GUANGDONG OPPO MOBILE TELECOMMUNICATIONS CORP., LTD.) 27 September 2018 (2018-09-27) description, page 8, line 15 to page 23, line 17 | 1-63 |
| X | 3GPP TSG RAN NR. "Physical layer procedures for data (Release 16)" *3GPP TS 38.214 v16.6.0*, 01 July 2021 (2021-07-01), section 5 | 1-63 |
| A | CN 115484133 A (HUAWEI TECHNOLOGIES CO., LTD.) 16 December 2022 (2022-12-16) entire document | 1-63 |
| A | WO 2022267876 A1 (HUAWEI TECHNOLOGIES CO., LTD.) 29 December 2022 (2022-12-29) entire document | 1-63 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **24 April 2024** | **06 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/076255** |

### C. DOCUMENTS CONSIDERED TO BE RELEVANT

| Category* | Citation of document, with indication, where appropriate, of the relevant passages | Relevant to claim No. |
|---|---|---|
| A | 3GPP TSG RAN NR. "Physical channels and modulation (Release 15)" *3GPP TS 38.211 v2.0.0*, 14 December 2017 (2017-12-14), entire document | 1-63 |
| A | QUALCOMM et al. "Draft CR to 38.214 Update to reflect new RRC parameter to enable capability 2" *3GPP TSG RAN WG1 #95, R1-1814334*, 16 November 2018 (2018-11-16), entire document | 1-63 |

Form PCT/ISA/210 (second sheet) (July 2022)

**INTERNATIONAL SEARCH REPORT**
Information on patent family members

| | International application No. |
| --- | --- |
| | **PCT/CN2024/076255** |

| Patent document cited in search report | | | Publication date (day/month/year) | Patent family member(s) | | | Publication date (day/month/year) |
| --- | --- | --- | --- | --- | --- | --- | --- |
| CN | 114928386 | A | 19 August 2022 | WO | 2020200059 | A1 | 08 October 2020 |
| | | | | EP | 3937391 | A1 | 12 January 2022 |
| | | | | US | 2022022193 | A1 | 20 January 2022 |
| | | | | KR | 20210142724 | A | 25 November 2021 |
| | | | | VN | 83664 | A | 25 January 2022 |
| | | | | IN | 202137049736 | A | 11 March 2022 |
| | | | | JP | 2022528402 | W | 10 June 2022 |
| | | | | CN | 111769857 | A | 13 October 2020 |
| WO | 2018170842 | A1 | 27 September 2018 | RU | 2726155 | C1 | 09 July 2020 |
| | | | | AU | 2017404901 | A1 | 17 October 2019 |
| | | | | KR | 20190126118 | A | 08 November 2019 |
| | | | | EP | 3605988 | A1 | 05 February 2020 |
| | | | | ES | 2877857 | T3 | 17 November 2021 |
| | | | | US | 2020252191 | A1 | 06 August 2020 |
| | | | | US | 2022200775 | A1 | 23 June 2022 |
| | | | | CA | 3057535 | A1 | 27 September 2018 |
| | | | | JP | 2020516143 | A | 28 May 2020 |
| | | | | BR | 112019019822 | A2 | 22 April 2020 |
| | | | | PH | 12019502192 | A1 | 08 June 2020 |
| | | | | EP | 3863258 | A1 | 11 August 2021 |
| | | | | CN | 110431818 | A | 08 November 2019 |
| | | | | CN | 111147219 | A | 12 May 2020 |
| | | | | SG | 11201908821 | A1 | 30 October 2019 |
| | | | | MX | 2019011339 | A1 | 12 November 2019 |
| | | | | IL | 269573 | A | 28 November 2019 |
| | | | | IN | 201917042258 | A | 13 December 2019 |
| | | | | VN | 68114 | A | 30 January 2020 |
| | | | | HK | 40011266 | A | 10 July 2020 |
| | | | | ZA | 201906962 | A | 27 January 2021 |
| | | | | PH | 12019502192 | A1 | 08 June 2020 |
| CN | 115484133 | A | 16 December 2022 | WO | 2022262620 | A1 | 22 December 2022 |
| WO | 2022267876 | A1 | 29 December 2022 | CN | 115529667 | A | 27 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310183004